# EUROPEAN PATENT APPLICATION

(11) **EP 4 099 255 A1**
(43) Date of publication of application: **07.12.2022**
(21) Application number: 21748027.6
(22) Date of filing: 25.01.2021
(51) Int. Cl.: G06Q 30/06, G07G 1/01, G07G 1/12

(54) **PRODUCT SELECTION SUPPORT SYSTEM AND PRODUCT SELECTION SUPPORT METHOD**

(30) Priority: 30.01.2020 JP 2020014196
(71) Applicant: Japan Tobacco Inc., Tokyo 105-6927 (JP)
(72) Inventor: OJIMA, Atsushi, Tokyo 105-6927 (JP)
(74) Representative: Hoffmann Eitle
(86) International application number: PCT/JP2021/002377
(87) International publication number: WO 2021/153481

(57) **Abstract**

This product selection support system is provided with: a means for acquiring selected brand information indicating the brand of a cartridge product selected by a customer's predetermined operation on a user interface unit; a means for acquiring specific brand information indicating a cartridge product of a specific brand among cartridge products of a plurality of brands; and a means for outputting, to the user interface unit, predetermined information regarding a main unit device of an aerosol inhaler, in accordance with the predetermined operation, when a main unit device capable of using the cartridge product of the specific brand indicated by the acquired specific brand information cannot use the cartridge product of the brand indicated by the acquired selected brand information.

## Description

### Technical Field

The present invention relates to a technique for supporting selection of a cartridge product in a situation such as when a customer orders or purchases a cartridge product of a certain brand to be used by being attached to a main unit of an aerosol inhaler, or registers brand information of the cartridge product.

### Background Art

Aerosol inhalers that generate an aerosol to be inhaled by a user, such as heat-not-burn cigarettes and electronic cigarettes, have been distributed in recent years. An aerosol inhaler is mainly constituted by a cartridge that is filled with liquid, tobacco leaves, or the like and is used while being replaced, and a main unit. Companies sell their own main units as well as dedicated cartridge products. Cartridge products include various types of products such as capsule products filled with liquid and stick products filled with tobacco leaves. Further, cartridge products of a plurality of types of brands having different flavors and tastes are provided as cartridge products dedicated to individual main units.

PTL 1 below discloses an electrically heated cigarette smoking system, PTL 2 below discloses an aerosol inhaler, and PTL 3 below discloses a cartridge for an aerosol inhaler.

### Citation List

### Patent Literature

PTL 1: Japanese Unexamined Patent Application Publication (Translation of PCT Application) No. 2006-505281
PTL 2: Japanese Unexamined Patent Application Publication No. 2009-131367
PTL 3: International Publication No. 2018/002994

### Summary of Invention

### Technical Problem

As described above, a plurality of types of main units and cartridge products of a plurality of types of brands dedicated to individual main units, which are sold by manufacturers, are provided as aerosol inhalers. Accordingly, a customer needs to accurately select and purchase a cartridge product usable with a main unit possessed by the customer. If a cartridge product that is not usable with the possessed main unit is purchased by mistake, the customer is not able to use the cartridge product unless a main unit dedicated to the cartridge product is newly purchased, which inconveniences the customer.

The present invention has been made in view of such circumstances, and provides a technique for supporting selection of a cartridge product of an aerosol inhaler so that a customer can accurately select a cartridge product usable with their own main unit.

### Solution to Problem

The present invention provides a product selection support system for supporting selection of a cartridge product to be used by being attached to a main unit of an aerosol inhaler, the product selection support system including a first acquisition means for acquiring selected brand information indicating a brand of a cartridge product selected by a customer's predetermined operation on a user interface unit; a second acquisition means for acquiring specific brand information indicating a cartridge product of a specific brand among cartridge products of a plurality of brands; and an output processing means for causing the user interface unit to output predetermined information related to the main unit of the aerosol inhaler, in accordance with the predetermined operation, when the cartridge product of the brand indicated by the acquired selected brand information is not usable with a main unit with which the cartridge product of the specific brand indicated by the acquired specific brand information is usable.

The present invention further provides a product selection support system for supporting selection of a cartridge product to be used by being attached to a main unit of an aerosol inhaler, the product selection support system including a first acquisition means for acquiring selected brand information indicating a brand of a cartridge product selected by a customer's predetermined operation on a user interface unit; a second acquisition means for acquiring main unit information related to a specific main unit among a plurality of types of main units; and an output processing means for causing the user interface unit to output predetermined information related to the main unit of the aerosol inhaler, in accordance with the predetermined operation, when the cartridge product of the brand indicated by the acquired selected brand information is not usable with the specific main unit indicated by the acquired main unit information.

The present invention further provides a product selection support method for supporting selection of a cartridge product to be used by being attached to a main unit of an aerosol inhaler, the product selection support method including, by one or more computers: acquiring selected brand information indicating a brand of a cartridge product selected by a customer's predetermined operation on a user interface unit; acquiring specific brand information indicating a cartridge product of a specific brand among cartridge products of a plurality of brands; and causing the user interface unit to output predetermined information related to the main unit of the aerosol inhaler, in accordance with the predetermined operation, when the cartridge product of the brand indicated by the acquired selected brand information is not usable with a main unit with which the cartridge product of the specific brand indicated by the acquired specific brand information is usable.

The present invention further provides a product selection support method for supporting selection of a cartridge product to be used by being attached to a main unit of an aerosol inhaler, the product selection support method including, by one or more computers: acquiring selected brand information indicating a brand of a cartridge product selected by a customer's predetermined operation on a user interface unit; acquiring main unit information related to a specific main unit among a plurality of types of main units; and causing the user interface unit to output predetermined information related to the main unit of the aerosol inhaler, in accordance with the predetermined operation, when the cartridge product of the brand indicated by the acquired selected brand information is not usable with the specific main unit indicated by the acquired main unit information.

In addition, the present invention may provide a computer program for causing one or more computers to execute the product selection support method described above, or a recording medium readable by one or more computers and having such a computer program recorded thereon.

### Advantageous Effects of Invention

The present invention may provide a technique for supporting selection of a cartridge product of an aerosol inhaler so that a customer can accurately select a cartridge product usable with their own main unit.

### Brief Description of Drawings

Fig. 1 is a schematic diagram illustrating a configuration of a tobacco product management system according to a first embodiment.
Fig. 2 is a diagram illustrating an example installation of the tobacco product management system according to the first embodiment.
Fig. 3 is a perspective view of a pack fixture.
Fig. 4 is an enlarged side view of a portion of the pack fixture according to the first embodiment, illustrating one magazine and its peripheral portion.
Fig. 5 is a schematic diagram illustrating a hardware configuration of a support PC and an order terminal.
Fig. 6 is a block diagram illustrating an example processing configuration of the support PC, the order terminal, a first controller, and a second controller.
Fig. 7A is a diagram illustrating an example of a customer information table.
Fig. 7B is a diagram illustrating an example of a purchase history table.
Fig. 8 is a diagram illustrating an example of a brand master table and a store-specific brand information table.
Fig. 9 is a diagram illustrating an example of a cartridge product identification table.
Fig. 10 is a diagram illustrating an example of a brand selection screen.
Fig. 11 is a diagram illustrating an example of a brand order screen.
Fig. 12 is a diagram illustrating an example of a warning screen related to a main unit of an aerosol inhaler.
Fig. 13 is a sequence chart illustrating an example operation related to ordering and removal of a tobacco product in the tobacco product management system according to the first embodiment.
Fig. 14 is a flowchart illustrating a display determination method of the warning screen related to the main unit of the aerosol inhaler in the first embodiment.
Fig. 15 is a sequence chart illustrating an example operation related to ordering and removal of a tobacco product in a tobacco product management system according to a second embodiment.
Fig. 16 is a flowchart illustrating a display determination method (details of step (S110) in Fig. 15) of a warning screen related to a main unit of an aerosol inhaler in the second embodiment.
Fig. 17 is a diagram illustrating an example of a waiting screen displayed after an order operation of a tobacco product.
Fig. 18 is a diagram illustrating an example of a brand order screen G3 to which a recommended-product presentation area G4 is added.

### Description of Embodiments

Embodiments of the present invention will be described hereinafter with reference to the drawings. The following embodiments are each illustrative, and the present invention is not limited to the configurations of the following embodiments.

In the following, a tobacco product management system (hereinafter sometimes referred to as the present system) will be exemplarily illustrated as an embodiment of the present invention. The present system mainly handles tobacco products, and may further handle tobacco accompanying products such as a main unit of an aerosol inhaler and accessory products.

The "tobacco products" include not only cigarettes, smokeless cigarettes, cigars, hand-rolled cigarettes, and the like, but also cartridge products such as electronic cigarettes and heat-not-burn cigarettes that are used by being attached to main units of aerosol inhalers. In this specification, when a "cartridge product" needs to be distinguished from other tobacco products, it is referred to as a "cartridge product".

Examples of the unit of purchase of such "tobacco products" include individual packages of tobacco products and cartons of tobacco products in which a plurality of (for example, ten) individual packages of tobacco products of the same type are collectively packaged. In this specification, when it is necessary to distinguish between an individual package and a carton, an individual package of tobacco products is referred to as a "pack product" and a carton of tobacco products is referred to as a "carton product".

The "pack product" includes not only a plurality of (for example, 20) cigarettes serving as a unit of purchase but also an individual package of cartridge products in which one or more cartridges (capsules, sticks, or the like) are packaged, and the "carton product" also includes a product in which a plurality of such individual packages of cartridge products are collectively packaged.

Unlike a cigarette or the like, an aerosol inhaler does not burn tobacco leaves, and a user inhales generated aerosol (such as vapor). In this specification, inhalation of the aerosol is also referred to as "smoking", for convenience of description. Thus, the user of the aerosol inhaler is also referred to as a "smoker".

### [Overview]

Prior to the description of the details of the present system, an overview of the features of the present system will be described.

The present system has at least a function of supporting selection of a cartridge product to be used by being attached to a main unit of an aerosol inhaler.

The present system includes a first acquisition means, a second acquisition means, and an output processing means, which are implemented by one or more computers executing a computer program. The computer constituting the present system may include a general-purpose computer such as a PC (Personal Computer), a dedicated computer such as an embedded microcomputer, or both of them. The computer may be only a stationary computer, may be only a portable computer such as a smartphone, or may be both.

The first acquisition means acquires selected brand information indicating a brand of a cartridge product selected by a customer's predetermined operation on a user interface unit.

The user interface unit is directly or indirectly connected to the computer constituting the present system, and is desirably capable of receiving an operation of a customer and outputting some information. The user interface unit does not limit a specific hardware configuration. The user interface unit includes, for example, an input device capable of receiving a customer's predetermined operation and an output device capable of outputting information to the customer. The input device is a device that receives input of a user operation, such as a keyboard or a mouse. The output device includes not only a display device such as an LCD (Liquid Crystal Display) display or a CRT (Cathode Ray Tube) display but also one or more devices that provide some output, such as a speaker, a lighting device, or a printer device. The user interface unit may be a touch panel into which a display device and an input device are integrated.

The "customer's predetermined operation" on the user interface unit is desirably an operation including an operation of selecting a brand of a cartridge product, and the purpose or specific operation thereof is not limited in any way. The "customer's predetermined operation" may be, for example, an operation of holding a cartridge product held by the customer over the user interface unit, an operation of pressing a display of the user interface unit, an operation of pressing a hardware button of the user interface unit, or an operation of giving voice to the user interface unit (microphone) or performing a gesture. In addition, the "customer's predetermined operation" may be an operation at the time of placing an order or an operation for registering a brand of a cartridge product.

In this specification, the "brand" of a tobacco product is information that can identify each individual type of tobacco product and is represented as a product name of a tobacco product. For example, a brand name of a cartridge product is a name obtained by adding designation indicating a type of flavor or taste and the like and the product name of the main unit to the name of a brand group. Examples of the brand group name include representative name of brand, such as "MEVIUS (registered trademark)", "Pianissimo (registered trademark)", and "CAMEL (registered trademark)". The product name of the main unit is, for example, "Ploom Tech (registered trademark)", "Ploom S (registered trademark)", or the like. Examples of other markings of the brand name of the cartridge product include "regular", "menthol", "brown aroma", "mild blend", and "regular taste".

The selected brand information acquired by the first acquisition means is desirably information indicating the brand of the cartridge product selected by the operation of the customer, and the specific content thereof is not limited. The selected brand information is, for example, a brand ID that can identify each brand of a cartridge product.

The second acquisition means acquires specific brand information indicating a cartridge product of a specific brand among cartridge products of a plurality of brands.

The "cartridge product of the specific brand" indicated by the specific brand information acquired by the second acquisition means is a cartridge product of a certain brand that can be identified in relation to the customer, and is preferably a cartridge product of a brand usable with the main unit of the aerosol inhaler owned by the customer. The "cartridge product of the specific brand" may be, for example, a cartridge product of a brand registered for each customer in the present system or in a computer external to the present system, a cartridge product of a brand included in a purchase history of cartridge products managed for each customer, or a cartridge product of the most recently purchased brand, which is managed for each customer. Such specific brand information makes it possible to guess the main unit owned by the customer with high accuracy. For example, a cartridge product of a brand usable with the main unit owned by the customer may be registered in or outside the present system, and a cartridge product of a brand purchased once or most recently by the customer is highly likely to be a product usable with the main unit owned by the customer.

The specific brand information acquired by the second acquisition means is desirably information indicating a cartridge product of a specific brand as described above, and the specific content thereof is not limited. The specific brand information is, for example, a brand ID that can identify a cartridge product of a specific brand.

When the cartridge product of the brand indicated by the selected brand information acquired by the first acquisition means is not usable with the main unit with which the cartridge product of the specific brand indicated by the specific brand information acquired by the second acquisition means is usable, the output processing means causes the user interface unit described above to output predetermined information related to the main unit of the aerosol inhaler in accordance with the predetermined operation described above performed by the customer.

As described above, since a cartridge product dedicated to each main unit is provided, a combination of a main unit and a cartridge product that is not intended by the manufacturer corresponds to "the case where the cartridge product of the brand is not usable with the main unit". Accordingly, even if a cartridge product of a certain brand is attachable to a certain main unit and is usable with the certain main unit to some extent, a case where the combination of the main unit and the carton product is a combination that is not intended by the manufacturer corresponds to "the case where the cartridge product of the brand is not usable with the main unit".

The predetermined information to be output to the user interface unit is desirably information related to the main unit of the aerosol inhaler, and the specific content thereof is not limited. For example, the predetermined information may simply be warning information or guide information indicating that the main unit of the aerosol inhaler is necessary, or may be warning information or guide information indicating a main unit with which the cartridge product of the brand indicated by the selected brand information is usable and indicating the necessity of the main unit.

In addition, the output form of the predetermined information is not limited. The predetermined information may be displayed on a display device, may be output by voice, or may be printed out from a printer device.

In this embodiment, accordingly, when a cartridge product of a brand selected by the customer's predetermined operation is not usable with a main unit with which a cartridge product of a specific brand indicated by separately acquired specific brand information is usable, predetermined information related to the main unit is output in accordance with the predetermined operation.

As described above, the acquired specific brand information preferably indicates a cartridge product capable of identifying a main unit of an aerosol inhaler owned by the customer who has performed the predetermined operation. As a result, it is possible to identify a case where the cartridge product of the brand selected by the customer's predetermined operation is not usable with the main unit owned by the customer, and it is possible to inform the customer of incorrect selection of the cartridge product by outputting the predetermined information related to the main unit. Furthermore, it is possible to eliminate inconvenience for selection of a cartridge product, such as outputting the predetermined information related to the main unit each time a cartridge product is selected.

However, as described above, instead of indirectly estimating or identifying the model of the main unit of the aerosol inhaler owned by the customer using the specific brand information acquired by the second acquisition means, it is also possible to directly identify the model of the main unit owned by the customer.

In this case, the second acquisition means acquires, instead of specific brand information, main unit information related to a specific main unit among a plurality of types of main units, and, when the cartridge product of the brand indicated by the selected brand information is not usable with the specific main unit indicated by the acquired main unit information, the output processing means causes the user interface unit to output predetermined information related to the main unit of the aerosol inhaler in accordance with the predetermined operation.

The main unit information acquired by the second acquisition means may be identification information that can identify the model of the specific main unit (main unit owned by the customer), or may be identification information or address information of a table that stores a list of brands of cartridge products usable with the specific main unit.

The second acquisition means can acquire the main unit information via, for example, communication with the main unit, through recognition of an image of the main unit, or by other methods. The method by which the second acquisition means acquires the main unit information is not limited in any way.

As described above, even when the model of the main unit owned by the customer is directly identified, an operation and effect similar to those described above can be obtained.

A tobacco product management system (present system) 1 having the features described above will now be described in detail. In the following, for ease of description, an embodiment in which the second acquisition means acquires the specific brand information will be described as a first embodiment, and an embodiment in which the second acquisition means acquires the main unit information will be described as a second embodiment.

### «First Embodiment»

### [Tobacco Product Management System]

A tobacco product management system (present system) 1 according to a first embodiment having the features described above will now be described in detail.

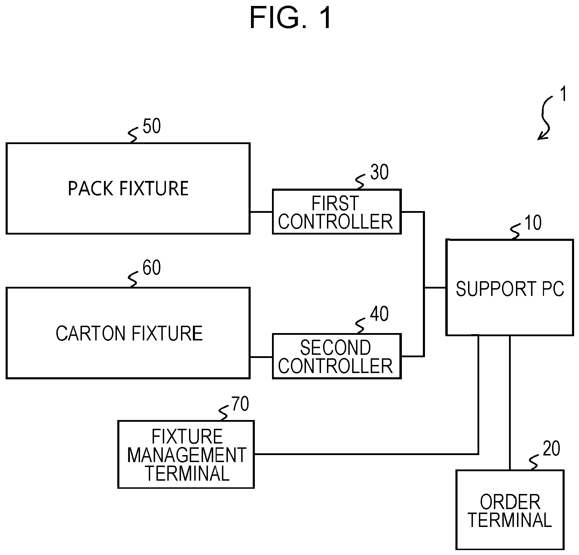

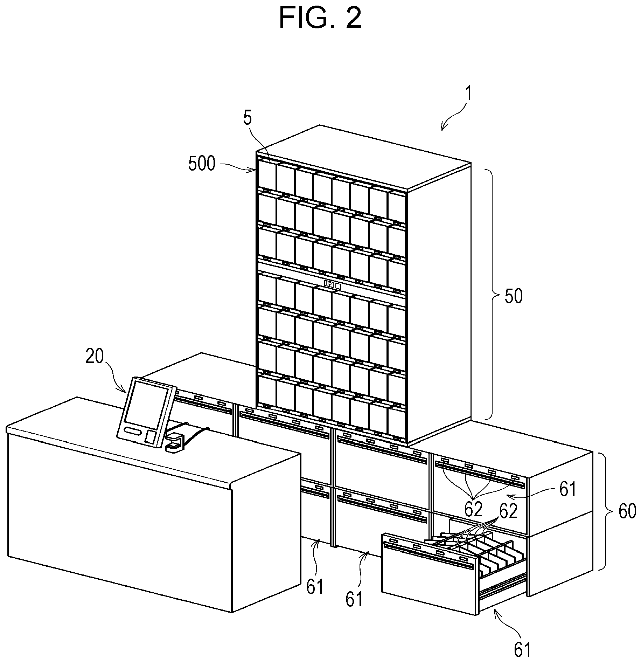

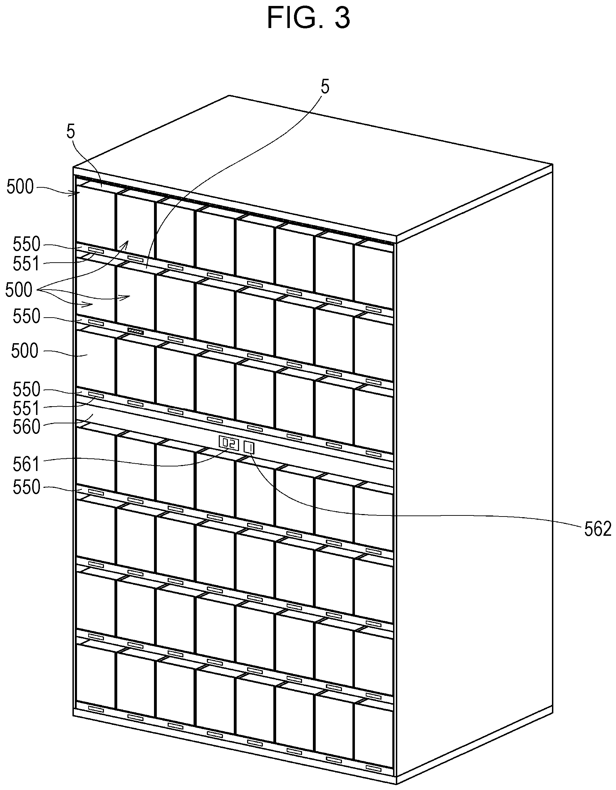

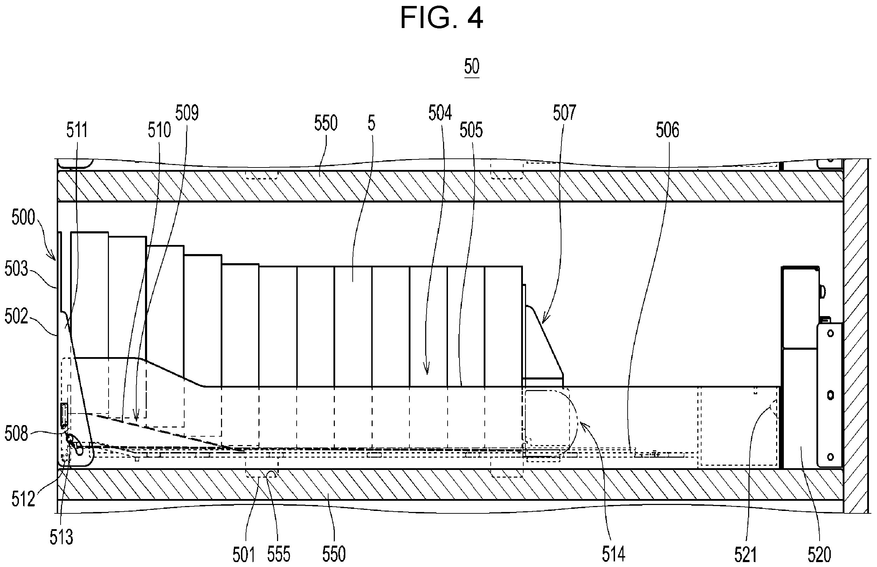

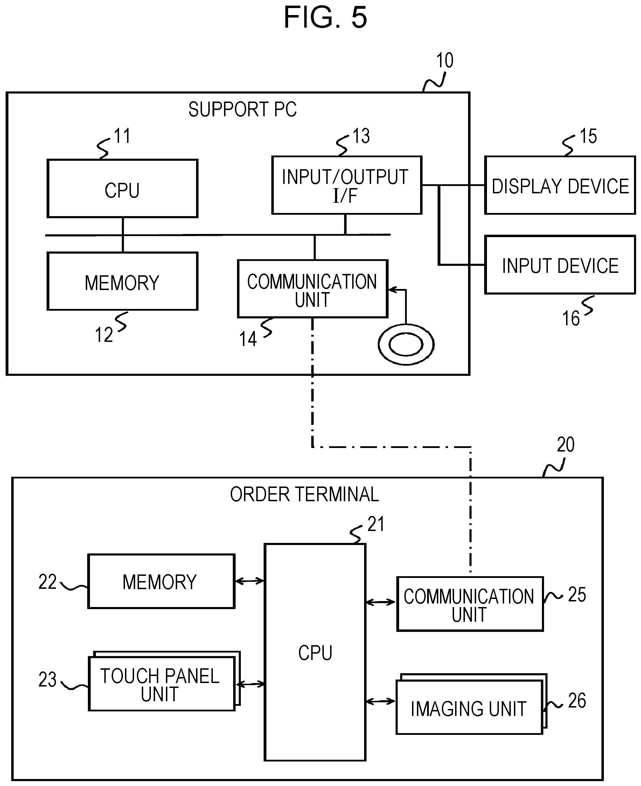

Fig. 1 is a schematic diagram illustrating a configuration of the tobacco product management system 1 according to the first embodiment. Fig. 2 is a diagram illustrating an example installation of the tobacco product management system 1 according to the first embodiment. Fig. 3 is a perspective view of a pack fixture 50. Fig. 4 is an enlarged side view of a portion of the pack fixture 50 according to the first embodiment, illustrating one magazine 500 and its peripheral portion. Fig. 5 is a schematic diagram illustrating a hardware configuration of a support PC 10 and an order terminal 20.

As illustrated in Fig. 2, the present system 1 is installed in a store such as a convenience store. In the following, the store in which the present system 1 is installed is sometimes referred to as the present store or the target store.

As illustrated in Fig. 1, the present system 1 is constituted by the support PC (Personal Computer) 10, the order terminal 20, a first controller 30, a second controller 40, the pack fixture 50, a carton fixture 60, a fixture management terminal 70, and so on.

The support PC 10 is a so-called computer. As illustrated in Fig. 5, the support PC 10 includes a CPU 11, a memory 12, an input/output interface (I/F) 13, a communication unit 14, and so on. The CPU 11 is connected to other individual units via a communication line such as a bus.

The CPU 11 includes, in addition to a typical CPU, an MCU, an MPU, an application-specific integrated circuit (ASIC), a DSP (Digital Signal Processor), a GPU (Graphics Processing Unit), and so on.

The memory 12 is a RAM (Random Access Memory), a ROM (Read Only Memory), or an auxiliary storage device (such as a hard disk).

The input/output I/F 13 can be connected to a user interface device such as a display device 15 and an input device 16. The display device 15 is a device that displays a screen corresponding to rendering data processed by the CPU 11 or the like, such as an LCD (Liquid Crystal Display) or a CRT (Cathode Ray Tube) display. The input device 16 is a device that receives input of a user operation, such as a keyboard or a mouse. The display device 15 and the input device 16 may be an integrated touch panel or may not be connected to each other.

The communication unit 14 performs wired communication or wireless communication with any other computer, exchange of signals with any other device, and the like. In the first embodiment, the communication unit 14 communicates with the first controller 30, the second controller 40, the order terminal 20, and a server device (not illustrated). The communication method performed by the communication unit 14 is not limited in any way. The communication unit 14 is also connectable to a transportable recording medium or the like.

As illustrated in Fig. 2, the order terminal 20 is a stationary computer installed on a cash register counter in the present store so as to be operable by a customer and a salesperson. However, the order terminal 20 may be installed in a location other than the cash register counter.

As illustrated in Fig. 5, the order terminal 20 includes a CPU 21, a memory 22, a touch panel unit 23, a communication unit 25, an imaging unit 26, and so on. The CPU 21 is connected to other individual units via a communication line such as a bus.

The touch panel unit 23 includes a display unit and a touch sensor. The display unit includes a monitor and performs display processing. The touch sensor senses an external touch or a close proximity state. In the first embodiment, two touch panel units 23 are disposed back to back, one being disposed to face the customer, the other being disposed to face the salesperson. The two touch panel units 23 have respective display panels, on which the same display is output. This allows the salesperson to check a touch panel operation performed by the customer and allows the customer to check a touch panel operation performed by the salesperson. In addition, the customer and the salesperson can cooperate with each other to perform a series of touch-panel-based operations for ordering a tobacco product.

The imaging unit 26 is a unit that captures an image. In the first embodiment, the imaging unit 26 includes a barcode scanner capable of reading a barcode, a two-dimensional barcode (such as QR code (registered trademark)), and the like, and a vein imaging unit for vein authentication. The barcode scanner is capable of reading a barcode or QR code (registered trademark) placed on packaging of a tobacco product or displayed on a mobile terminal of a customer. The vein imaging unit is capable of capturing a vein image from a person's finger or palm. A specific imaging method of the imaging unit 26 is not limited in any way.

The communication unit 25 performs wired communication or wireless communication with any other computer, exchange of signals with any other device, and the like. In the first embodiment, the communication unit 25 performs short-range wireless communication with a mobile terminal of a customer and also performs wired communication or wireless communication with the order terminal 20. The communication method performed by the communication unit 25 is not limited in any way.

The CPU 21 and the memory 22 are similar to the CPU 11 and the memory 12 described above, respectively.

The hardware configurations illustrated in Fig. 5 are examples, and the hardware configurations of the support PC 10 and the order terminal 20 are not limited to those in the example illustrated in Fig. 5. The support PC 10 and the order terminal 20 can include other hardware elements (not illustrated), and the number of hardware elements included is not limited to that in the example in Fig. 5. For example, the support PC 10 or the order terminal 20 may include a plurality of CPUs.

The first controller 30 is a control board that controls the pack fixture 50, and the second controller 40 is a control board that controls the carton fixture 60. Specifically, the first controller 30 and the second controller 40 are embedded systems each including a CPU, a memory, a communication unit, an input/output interface, and so on, and control the pack fixture 50 and the carton fixture 60, respectively, in response to the corresponding CPUs executing control programs stored in the corresponding memories. The details of the control of the pack fixture 50 by the first controller 30 and the details of the control of the carton fixture 60 by the second controller 40 will be described below.

The first controller 30 is connected to the components of the pack fixture 50 via the communication unit or the input/output interface and exchanges signals with the individual components. The second controller 40 is connected to the components of the carton fixture 60 via the communication unit or the input/output interface and exchanges signals with the individual components.

The first controller 30 and the second controller 40 are communicably connected to the support PC 10 via the communication unit and exchange signals with the support PC 10.

The fixture management terminal 70 is a portable, so-called computer and has a hardware configuration similar to that of the order terminal 20. Although not illustrated in Fig. 2, the fixture management terminal 70 is installed near the pack fixture 50. For example, the fixture management terminal 70 is installed in a side surface portion of the pack fixture 50.

The fixture management terminal 70 includes a touch panel, and the touch panel displays a fixture management menu that enables management of the pack fixture 50 or the carton fixture 60. The fixture management terminal 70 is communicably connected to the support PC 10 via a communication unit and sends information corresponding to the content of an operation performed on the fixture management menu to the support PC 10.

A barcode scanner may be connected to the fixture management terminal 70. In this case, a barcode placed on packaging of a pack product or a carton product for replenishment is read with the barcode scanner, and the read information is sent from the fixture management terminal 70 to the support PC 10.

In the example in Fig. 2, the pack fixture 50 and the carton fixture 60 are stacked one on top of the other and installed behind the cash register counter (back-counter side) in the present store. However, the positional relationship and the installation locations of the pack fixture 50 and the carton fixture 60 are not limited to those in the example in Fig. 2. For example, the pack fixture 50 may be installed on top of the back counter, and the carton fixture 60 may be installed beneath the back counter.

In the following description, for clarity, a description will be given of a single pack fixture 50 and a single carton fixture 60. However, two pack fixtures 50 and two carton fixtures 60 may be used. Specifically, the two carton fixtures 60 may be arranged side-by-side horizontally, and the two pack fixtures 50 may be arranged side-by-side in such a manner that each of the pack fixtures 50 is placed on top of a corresponding one of the carton fixtures 60. The number of pack fixtures 50 and the number of carton fixtures 60 to be installed in the present store are not limited.

In addition, the positional relationship of the structural elements may be described with the definition of directions such as front, rear, left, right, up, and down for easy understanding. Specifically, the front side of the pack fixture 50 and the carton fixture 60 is referred to as a front direction, the back side thereof is referred to as a rear direction, and a direction horizontal thereto and orthogonal to the front-rear direction is referred to as a lateral direction. In the lateral direction, the left side and the right side of the pack fixture 50 and the carton fixture 60 as viewed from the front side are referred to as a leftward direction and a rightward direction, respectively. However, the definition of these directions is for convenience and is not intended to limit the directions in which products embodying the present invention are manufactured or used.

The pack fixture 50 includes a plurality of shelves 550, each of which is capable of supporting a plurality of magazines 500 such that the plurality of magazines 500 are arranged laterally side by side. In the example in Fig. 2 and Fig. 3, the pack fixture 50 includes seven shelves 550, and each of the shelves 550 supports eight magazines 500 such that the magazines 500 are arranged laterally side by side. The number of shelves 550 included in the pack fixture 50 and the number of magazines 500 supported by each of the shelves 550 are not limited to those in the illustrated example.

An upper surface of each of the shelves 550 has insertion recesses 555 having a shape such that protrusions 501 of the corresponding magazines 500 are insertable into the insertion recesses 555 at positions corresponding to the protrusions 501 (see Fig. 4). That is, each of the protrusions 501 is inserted into a corresponding one of the insertion recesses 555 while the magazines 500 are mounted on the shelves 550. As a result, the magazines 500 can be mounted on the shelves 550 while positioned horizontally.

The magazines 500 are arranged laterally side by side at equal intervals on the shelves 550. In this state of arrangement, front wall portions 503 of flaps 502 of the magazines 500 are flush with each other. The front wall portions 503 of the flaps 502 of the magazines 500 are also flush with a front end surface of the shelves 550.

Each of the magazines 500 includes a mounting portion 504 on which a plurality of pack products 5 are mountable side by side in the front-rear direction, a pressing slider 507 disposed to be movable forward and backward along the mounting portion 504, and a wire reel 514 that urges the pressing slider 507 forward.

The mounting portion 504 is a box-shaped container that is long in the front-rear direction and is open upward, and allows the plurality of pack products 5 to be mounted side by side in a row in a vertical position. That is, the pack products 5 are mounted on the mounting portion 504 in a posture in which the longitudinal direction thereof is the upward-downward direction and the thickness direction thereof is the front-rear direction.

The mounting portion 504 is constituted by a mounting portion main body 505 and the flap 502 disposed in a front end portion of the mounting portion main body 505.

The mounting portion main body 505 includes a bottom 506 that supports the plurality of pack products 5 so that the plurality of pack products 5 are slidable forward, and a front plate 508 that restricts further forward movement of the forefront pack product 5 that reaches the front end portion of the bottom 506 by being pushed by the pressing slider 507. The front plate 508 stands upward at a front edge of the mounting portion main body 505, and a plate surface thereof faces in the front-rear direction.

A bottom-raising member 509 is attachable to the mounting portion main body 505 in a removable manner. Fig. 4 illustrates an example of the bottom-raising member 509 attached to the mounting portion main body 505.

The bottom-raising member 509 has a second bottom 510 for supporting articles such that the articles are slidable forward. The bottom-raising member 509 is attached to the mounting portion main body 505, which can make the upper end positions of the pack products 5 in the front end portion of the magazine 500 higher than that when the bottom-raising member 509 is not used. When pack products 5 to be mounted in the magazine 500 are of a brand having a relatively small height dimension, the bottom-raising member 509 allows each of the pack products 5 to be removed from the magazine 500 with workability similar to when each of pack products 5 of a brand having a relatively large height dimension is removed.

The flap 502 is formed by the front wall portion 503 shaped into a flat plate and a pair of left and right sidewall portions 511 each shaped into a flat plate, and is pivotally supported by a pair of left and right shafts 512 in the front end portion of the mounting portion main body 505. The flap 502 is pivotally supported by the pair of shafts 512, and is guided by a pair of left and right guide pins 513 disposed on the mounting portion main body 505 so as to be swingable in a forward tilting direction.

In a normal state in which the flap 502 is not tilted forward, the plate surface of the front wall portion 503 stands substantially vertically, which shields the front surface of the pack products 5 mounted on the mounting portion 504. The flap 502, which is urged in an upright direction by the wire reel 514, is maintained in an upright position in the normal state. In contrast, the flap 502 is brought into a forward tilted position by an external force, which allows the pack products 5 to be removed.

In the following description, bringing the plate surface of the front wall portion 503 of the flap 502 into an upright position may be referred to as closing the magazine 500, and bringing the flap 502 into the forward tilted position may be referred to as opening the magazine 500.

Further, the pack fixture 50 includes, in a rear end portion thereof, a distance measurement sensor 520 for each of the magazines 500 (see Fig. 4).

In the example in Fig. 4, the distance measurement sensor 520 is constituted by a distance measurement light-emitting portion 521 that emits light forward, and a light receiving portion (not illustrated) that receives reflected light of the light emitted from the distance measurement light-emitting portion 521. The distance measurement sensor 520 detects the distance between the distance measurement sensor 520 and the pressing slider 507, the distance between the distance measurement sensor 520 and the wire reel 514, or the distance between the distance measurement sensor 520 and the rearmost pack product 5.

For example, the distance measurement sensor 520 may start distance measurement in response the flap 502 being returned from the forward tilted position to the upright position. In this case, a structure may be provided in which the distance measurement light-emitting portion 521 emits light when the flap 502 is returned from the forward tilted position to the upright position. This enables distance measurement after a pack product 5 is removed and supplied for replenishment, and the number of accommodated pack products 5 can be detected each time a pack product 5 is removed and supplied for replenishment.

Detection signals from the distance measurement sensors 520 are sent to the first controller 30.

However, the measurement method, the installation positions, and the like of the distance measurement sensors 520 are not limited in any way as long as the numbers of pack products 5 accommodated in the magazines 500 are detectable. In addition, in the first embodiment, the distance measurement sensors 520 are used to detect the numbers of pack products 5 accommodated in the magazines 500. However, the numbers of accommodated pack products 5 may be detected not only by distance measurement but also by weight, pressure, and the like.

Further, each of the shelves 550 is provided with a pack position notification LED 551 on the front end surface thereof to give a notification of the position of a corresponding one of the magazines 500.

The pack position notification LEDs 551 give a notification of the respective mounting positions of the magazines 500 on the shelves 550. That is, the pack position notification LEDs 551 are disposed in the front end surface of the shelves 550 at positions below the respective magazines 500. Specifically, in the example in Fig. 2 and Fig. 3, a number of pack position notification LED 551 equal to the number of (eight) magazines 500 to be mounted are disposed on the front end surface of each of the shelves 550.

As a result, the pack position notification LED 551 for the shelf 550 having mounted thereon the magazine 500 in which the pack products 5 of a brand to be removed are accommodated, which is disposed below the magazine 500, is turned on.

Further, in the first embodiment, each of the pack position notification LEDs 551 is capable of being lit in a plurality of colors. Specifically, the lighting color at the time when the pack products 5 are removed and the lighting color at the time when the pack products 5 are supplied for replenishment are switched. The switching of the lighting colors of each of the pack position notification LEDs 551 may be implemented by switching an LED chip to emit light among a plurality of LED chips constituting the pack position notification LED 551, or may be implemented by any other method. Instead of the lighting colors, the lighting form, such as blinking and lighting up, may be switched between at the removal time and at the replenishment time.

Such turning on and off of the pack position notification LEDs 551 and the lighting color of the pack position notification LEDs 551 are controlled by the first controller 30, which will be described in detail below.

The pack fixture 50 further includes a horizontally long display panel 119 in the front end portion thereof at the center in the upward-downward direction. In the example in Fig. 2 and Fig. 3, the display panel 119 is disposed below the shelf 550 on the third row from the top.

The display panel 119 includes an order quantity display portion 117 and a terminal number display portion 118. The order quantity display portion 117 displays the order quantity designated with the order terminal 20, and the terminal number display portion 118 displays the number of the order terminal 20. Since the example in Fig. 2 provides only one order terminal 20, the terminal number display portion 118 displays "1". When a plurality of order terminals 20 are provided, the number of the order terminal 20 from which an order instruction is issued is displayed in the terminal number display portion 118.

For example, the order quantity display portion 117 and the terminal number display portion 118 are constituted by seven segment displays. In the example in Fig. 2 and Fig. 3, the order quantity display portion 117 is constituted by two seven-segment displays, and the terminal number display portion 118 is constituted by a single seven-segment display. However, the order quantity display portion 117 and the terminal number display portion 118 may be implemented by any method other than that in the illustrated example, and may be implemented by a liquid crystal monitor or the like.

The display of the order quantity display portion 117 and the terminal number display portion 118 is controlled by the first controller 30, which will be described in detail below.

Accordingly, for example, in a case where two pack products 5 of brand A are ordered from the order terminal 20 with terminal number 1, the order quantity display portion 117 displays "2", and the terminal number display portion 118 displays "1". In addition, the pack position notification LED 551 for the shelf 550 having mounted thereon the magazine 500 in which the pack products 5 of the brand A are accommodated, which is disposed below the magazine 500, is turned on.

The salesperson is able to easily grasp that a number of pack products 5 equal to the number (two) displayed in the order quantity display portion 117 are to be removed from the magazine 500 above the pack position notification LED 551 that is turned on.

The carton fixture 60 includes a rectangular parallelepiped cabinet and a plurality of drawer racks 61 held in the cabinet. In the example in Fig. 2, eight drawer racks 61 are illustrated. However, the number of drawer racks 61 included in the carton fixture 60 is not limited to that in the example in Fig. 2.

Each of the drawer racks 61 includes a tray-like rack body that supports a plurality of carton products with a bottom plate thereof, and a front wall portion that is disposed at the front end of the rack body in a vertically upright state to allow the operator to pull the drawer rack 61 from the cabinet and slide the drawer rack 61 into the cabinet. In a state where the drawer racks 61 are in the cabinet, the front wall portions thereof are substantially flush with a front end portion of the cabinet and a front surface portion of the pack fixture 50.

The rack body of each of the drawer racks 61 has a plurality of longitudinal partitions and a plurality of lateral partitions. The plurality of longitudinal partitions extend in the front-rear direction and divide the inside of the drawer rack 61 into areas in the left-right direction. The plurality of lateral partitions divide the inside areas separated by the longitudinal partitions into areas in the front-rear direction. In the first embodiment, accordingly, the inside area of each of the drawer racks 61 is divided into four areas in the left-right direction and nine areas in the front-rear direction, and 36 accommodation areas in total are formed. Each accommodation area accommodates one carton product. That is, in the first embodiment, each of the drawer racks 61 is capable of accommodating 36 carton products.

Further, each of the drawer racks 61 has carton location notification LEDs 62 disposed on an upper portion of the front wall portion thereof, and the longitudinal partitions of each of the drawer racks 61 has carton location notification LEDs 62 disposed thereon to give a notification of the positions of the accommodation areas of each of the drawer racks 61.

The carton location notification LEDs 62 disposed on the front wall portion give a notification of each of the drawer racks 61 having accommodation areas formed therein and also give a notification of the positions of the accommodation areas in the drawer rack 61 in the left-right direction, which are separated by the longitudinal partitions. The carton location notification LEDs 62 disposed on the longitudinal partitions of each of the drawer racks 61 give a notification of the positions of the accommodation areas in the drawer rack 61 in the front-rear direction, which are separated by the lateral partitions.

That is, the carton location notification LEDs 62 disposed on the front wall portions give a notification of the drawer racks 61 and the positions of the drawer racks 61 in the left-right direction, and the carton location notification LEDs 62 disposed on the longitudinal partitions give a notification of the positions of the drawer racks 61 in the front-rear direction. This allows the operator to quickly access a target accommodation area.

Each of the drawer racks 61 further includes a detection sensor (not illustrated) that detects a carton product when the carton product is accommodated in an individual accommodation area. The detection sensor can be, for example, a weight sensor disposed on the bottom plate of the rack body. However, the detection sensor may be a sensor of any other type, such as an optical sensor or a capacitance sensor.

The carton fixture 60 further includes locking mechanisms that enable the respective drawer racks 61 to be selectively pulled from the cabinet. In a normal state, the locking mechanisms are in locked state to prevent all the drawer racks 61 from being pulled from the cabinet. Under the control of the second controller 40, the locking mechanisms are selectively set to unlocked state so that only a designated drawer rack 61 can be pulled from the cabinet. Accordingly, the drawer racks 61 and the locking mechanisms therefor in the first embodiment can be a stocker access unit that makes at least some of a plurality of product stocker portions (accommodation areas) accessible or inaccessible to the operator.

The locking mechanisms provided for the drawer racks 61 can prevent unauthorized access to the accommodation areas of carton products.

As described above, the pack products 5 to be accommodated in the pack fixture 50 and the carton products to be accommodated in the carton fixture 60 include individual packages of cartridge products and cartons of cartridge products.

### [Processing Configuration]

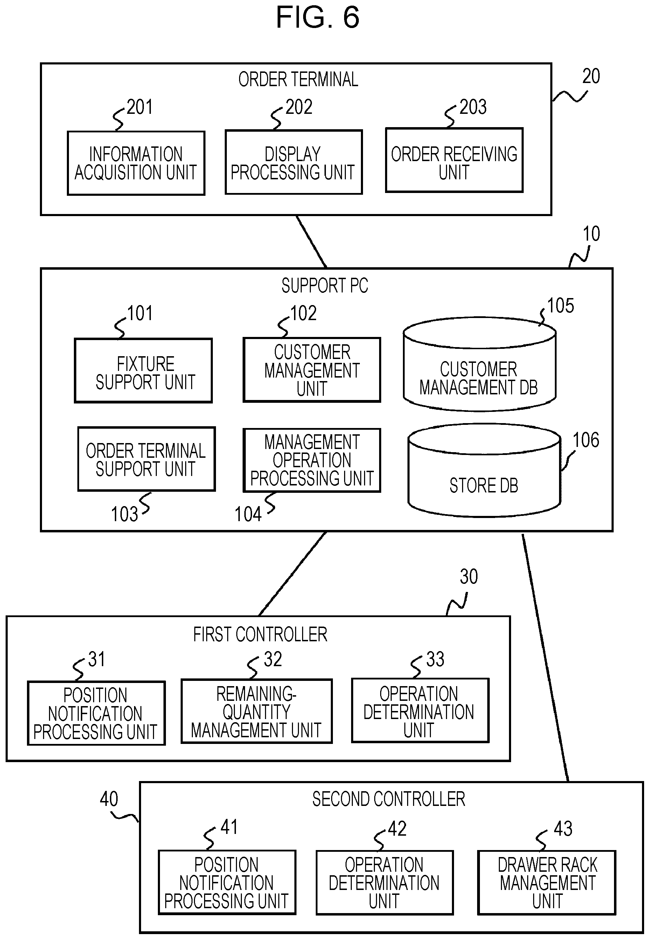

Next, the processing configurations of the support PC 10, the order terminal 20, the first controller 30, and the second controller 40 will be described with reference to Fig. 6. Fig. 6 is a block diagram illustrating an example processing configuration of the support PC 10, the order terminal 20, the first controller 30, and the second controller 40.

As described above in the overview, the main feature of the first embodiment is a process related to the selection of a cartridge product. In the following description, the process related to the main feature will be mainly described, and other processes will be omitted as appropriate. The present system 1 is thus capable of also executing processes other than the following process.

### [First Controller]

The first controller 30 includes a position notification processing unit 31, a remaining-quantity management unit 32, an operation determination unit 33, and so on. These are software elements and are embodied by the CPU executing a control program stored in the memory, such as a RAM or a ROM.

Upon receipt of a removal instruction or a replenishment instruction from the support PC 10, the position notification processing unit 31 turns on a corresponding pack position notification LED 551 disposed in the pack fixture 50 in accordance with the instruction. When removal processing or replenishment processing is to be performed on a plurality of magazines 500, the position notification processing unit 31 can collectively turn on the plurality of pack position notification LEDs 551 corresponding to the plurality of magazines 500.

Upon receipt of a removal instruction, the position notification processing unit 31 further causes the terminal number display portion 118 of the display panel 119 to display the terminal number included in the removal instruction, and causes the order quantity display portion 117 of the display panel 119 to display the quantity to be removed, which is included in the instruction.

Upon receipt of a detection signal from a distance measurement sensor 520 of the pack fixture 50, the remaining-quantity management unit 32 calculates the remaining quantity of pack products 5 accommodated in the corresponding magazine 500 in accordance with the detection signal. The method for calculating the remaining quantity of pack products 5 accommodated in the magazine 500 is not limited in any way.

The remaining-quantity management unit 32 sends the calculated remaining quantity to the support PC 10 together with the identifier of the corresponding magazine 500.

The operation determination unit 33 determines whether an operation of removing a pack product 5 from the magazine 500 by the operator or an operation of replenishing the magazine 500 with a pack product 5 by the operator is normal or abnormal. For example, the operation determination unit 33 uses the remaining quantity calculated by the remaining-quantity management unit 32 to determine whether the remaining quantity has decreased after receipt of the removal instruction. As a result, the operation determination unit 33 can determine a normal removal operation. Likewise, the operation determination unit 33 determines whether the remaining quantity has increased after receipt of the replenishment instruction. As a result, the operation determination unit 33 can determine a normal replenishment operation.

If the operation determination unit 33 determines that the removal operation or the replenishment operation is normal, the operation determination unit 33 notifies the support PC 10 of completion of removal or completion of replenishment, together with the remaining quantity newly calculated by the remaining-quantity management unit 32. On the other hand, if the operation determination unit 33 determines that the removal operation or the replenishment operation is abnormal, the operation determination unit 33 may blink the pack position notification LED 551 corresponding to the magazine 500 from which a pack product would be removed or which would be replenished with a pack product, or provide an error output using a beeper or the like.

### [Second Controller]

The second controller 40 includes a position notification processing unit 41, an operation determination unit 42, a drawer rack management unit 43, and so on. These are software elements and are embodied by the CPU executing a control program stored in the memory, such as a RAM or a ROM.

Upon receipt of a removal instruction or a replenishment instruction from the support PC 10, the position notification processing unit 41 turns on a corresponding carton location notification LED 62 disposed in the carton fixture 60 in accordance with the instruction. A removal instruction for collective removal may include position information of a plurality of accommodation areas. In this case, the position notification processing unit 41 can collectively turn on the plurality of carton location notification LEDs 62 corresponding to the plurality of pieces of position information.

The operation determination unit 42 determines whether an operation of removing a carton product from an accommodation area of a drawer rack 61 by the operator or an operation of replenishing the accommodation area with a carton product by the operator is normal or abnormal. If a removal instruction has been received, the operation determination unit 42 can determine whether the removal operation is normal or abnormal by determining whether a carton product has been removed from the target accommodation area. If a replenishment instruction has been received, the operation determination unit 42 can determine whether the replenishment operation is normal or abnormal by determining whether a carton product has been accommodated in the target accommodation area.

If the operation determination unit 42 determines that the removal operation or the replenishment operation is normal, the operation determination unit 42 notifies the support PC 10 of completion of removal or completion of replenishment. On the other hand, if the operation determination unit 42 determines that the removal operation or the replenishment operation is abnormal, the operation determination unit 42 may blink the carton location notification LED 62 corresponding to the accommodation area from which a carton product would be removed or which would be replenished with a carton product, or provide an error output using a beeper or the like.

The drawer rack management unit 43 controls the locking mechanisms for the drawer racks 61. Specifically, in accordance with a removal instruction or a replenishment instruction sent from the support PC 10, the drawer rack management unit 43 sets the locking mechanism for a corresponding drawer rack 61 to unlocked state after a corresponding carton location notification LED 62 is turned on. Thereafter, upon detection that the drawer rack 61 is completely accommodated, the drawer rack management unit 43 sets the locking mechanism for the drawer rack 61 to locked state.

### [Support PC]

The support PC 10 includes a fixture support unit 101, a customer management unit 102, an order terminal support unit 103, a management operation processing unit 104, a customer management database (DB) 105, a store database (DB) 106, and so on. These are software elements and are embodied by the CPU 11 executing a control program stored in the memory 12, such as a RAM or a ROM.

The customer management DB 105 stores customer registration information and purchase history information.

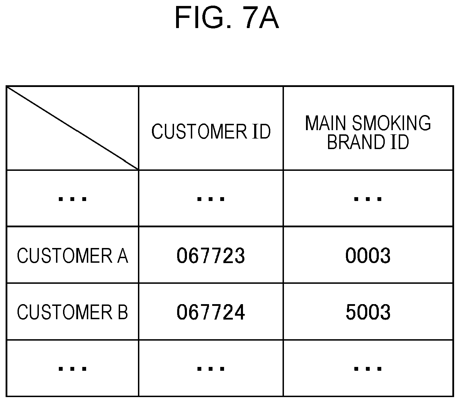

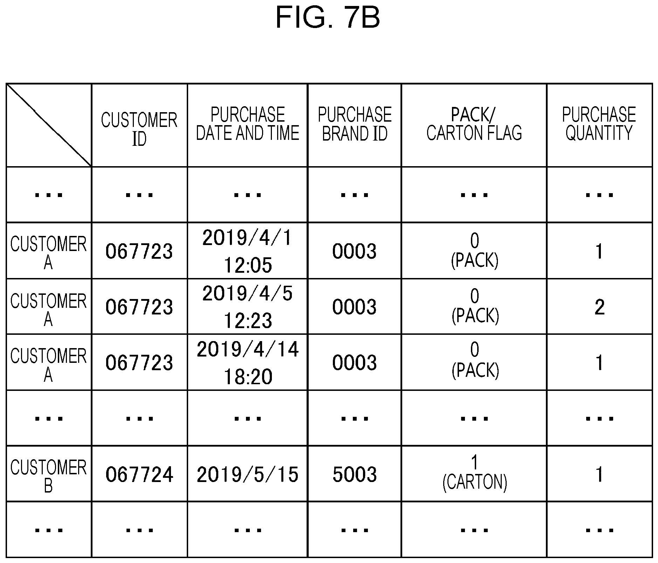

Fig. 7A is a diagram illustrating an example of a customer information table, and Fig. 7B is a diagram illustrating an example of a purchase history table. In the first embodiment, the customer registration information is stored in the customer information table, and the purchase history information is stored in the purchase history table.

As illustrated in Fig. 7A, the customer information table stores, for each customer, a customer ID, a main smoking brand ID, and so on. The customer registration information stored in the customer information table is managed by a customer management server device external to the present system 1 and is reflected in the customer management DB 105.

The customer ID is an identifier that can distinguish the customer (smoker) from others. In the first embodiment, the customer ID is set as identification information unique to all the customers managed by the customer management server device. The customer ID corresponds to the customer identifier described above, and the content thereof is as described above as the customer identifier.

The main smoking brand ID is a brand ID of a main smoking brand of the customer. The brand ID is an identifier that can identify a brand of tobacco products and may be an identifier uniquely assigned in the present system or an identifier assigned outside the present system, such as a JAN (Japan Article Number) code.

In this specification, the "main smoking brand" refers to a brand of a tobacco product registered for each customer (smoker) in the present system 1 and can also be referred to as a registered brand. A plurality of main smoking brands may be registered for each customer (smoker). In this case, a single customer ID is associated with a plurality of main smoking brand IDs. As a main smoking brand ID, the brand ID of a cartridge product may be registered, or the brand ID of a tobacco product other than a cartridge product may be registered. In the example in Fig. 7A, the main smoking brand ID of customer B is assumed to be a brand of a cartridge product, and the main smoking brand ID of customer A is assumed to be a brand of a tobacco product other than a cartridge product.

In the first embodiment, main smoking brand IDs are registered in the customer information table without cartridge products and other tobacco products being distinguished from each other. However, a main smoking brand ID of a cartridge product and a main smoking brand ID of any other tobacco product may be distinguished from each other and registered in the customer information table.

In the first embodiment, the method for registering customer IDs and main smoking brand IDs in the customer registration information managed by the customer management server device is not limited in any way. The present system 1 may also have a known function for registering an identifier related to a customer, or the function may be implemented outside the present system 1. A main smoking brand ID may also be registered in the customer management server device via an application installed in a customer mobile terminal, or the customer management server device may automatically select and register a main smoking brand ID using purchase history information for each customer described below. For example, based on the purchase history information, a brand that has been most recently purchased with high frequency may be selected as a main smoking brand.

In the first embodiment, the customer registration information stored in the customer information table may include a customer record in which no main smoking brand ID is registered.

The purchase history table stores information indicating the history of each purchase of a tobacco-related product for each customer. As illustrated in Fig. 7B, the purchase history table stores a customer ID, a purchase date, a purchase brand ID, a purchase quantity, and so on. The purchase history information stored in the purchase history table is managed by a customer management server device external to the present system 1 and is reflected in the customer management DB 105.

The customer management server device is assumed to manage all possible purchase history information including not only purchases in the present store but also purchases in other stores. In the purchase history table, all of purchase history information for each customer may be reflected, or part of the purchase history information such as purchase history information for the most recent half-year period may be reflected.

The customer ID is the same as the customer ID stored in the customer information table.

The purchase date and time indicates the date (year, month, and day) and time of each purchase. Accordingly, when a tobacco-related product is purchased a plurality of times on the same day, purchase information is stored in a plurality of records for each purchase.

The purchase brand ID indicates the brand ID of a purchased tobacco product.

A pack/carton flag is a flag indicating either a pack product or a carton product.

The purchase quantity indicates the quantity of purchased tobacco products. When the pack/carton flag indicates a pack product, the purchase quantity indicates the quantity for the pack product. When the pack/carton flag indicates a carton product, the purchase quantity indicates the quantity for the carton product.

The store DB 106 stores brand master information, store-specific brand information, cartridge product identification information, fixture setting information, and so on.

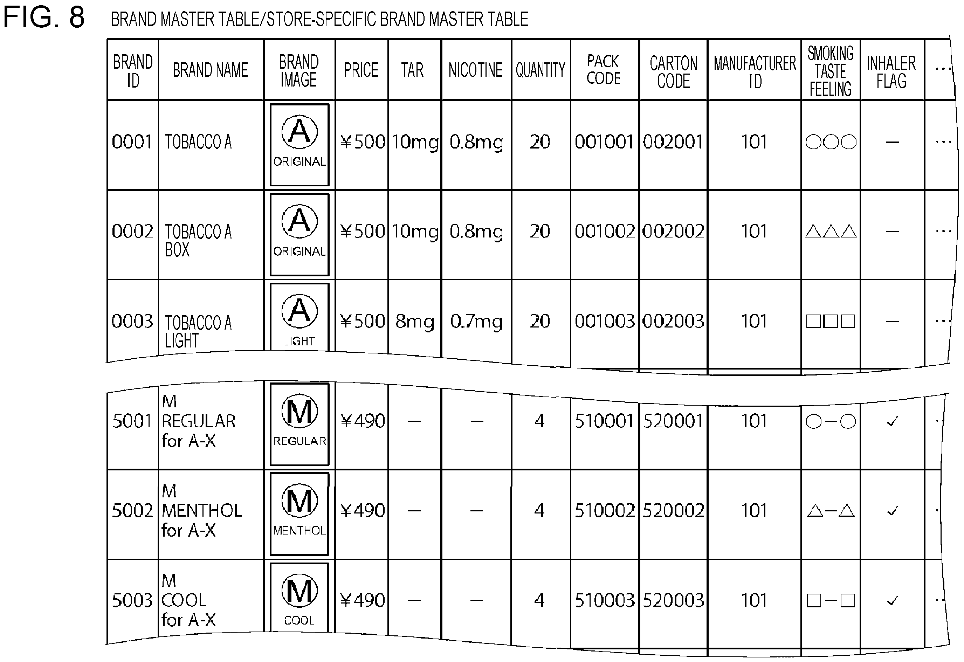

Fig. 8 is a diagram illustrating an example of a brand master table and a store-specific brand information table. In the first embodiment, the brand master information is stored in the brand master table, and the store-specific brand information is stored in the store-specific brand information table. The brand master table and the store-specific brand information table have similar table structures (field configurations). The store-specific brand information table is different from the brand master table in that the store-specific brand information table stores only brand information of brands currently dealt in by the present store.

As illustrated in Fig. 8, the brand master table and the store-specific brand information table store, for each brand, brand information such as a brand ID, a brand name, a brand image, a price, an amount of tar, an amount of nicotine, a pack quantity, a pack code, a carton code, a manufacturer ID, smoking taste feeling information, and an inhaler flag. In the first embodiment, the brand master table stores brand information of all brands on which information is available from tobacco manufacturers. That is, the brand master table stores information on newly released brands or rare brands that are yet to be dealt in by the present store and outdated brands that were once dealt in but are not currently dealt in by the present store or discontinued brands that have been discontinued.

The store-specific brand information table stores only brand information of brands that are currently dealt in by the present store.

The brand master table and the store-specific brand information table may also store other brand information not exemplarily illustrated in Fig. 8. The support PC 10 obtains the latest brand information from an external server device and reflects the latest brand information in the brand master table.

The pack code is a JAN code on packaging of a pack product of the corresponding brand. The carton code is a JAN code on packaging of a carton product of the corresponding brand.

The manufacturer ID is an identifier for identifying the manufacturer of tobacco products of the corresponding brand in the present system 1.

The smoking taste feeling information is information indicating a smoking taste feeling.

In this specification, the "smoking taste feeling" or "smoking taste" means a feeling that a smoker mainly experiences through the sense of taste or the sense of smell upon smoking (including aerosol inhalation), and includes, for example, a flavor or taste during smoking, an aftertaste, smoking satisfaction, a menthol feeling, and so on. The smoking taste feeling information can be generated as information converted into numerical values for each of one or more smoking taste feeling factors that can indicate such a smoking taste feeling. For example, the smoking taste feeling information can be represented as a vector having five smoking taste feeling factor, namely, flavor, taste, aftertaste, smoking satisfaction, and menthol feeling. In this case, for example, the flavor factor can be a numerical value of the intensity of the flavor, the taste factor can be a numerical value of the depth of the taste, the aftertaste factor can be a numerical value of the feeling of the aftertaste, the smoking satisfaction factor can be a numerical value of the weight of smoking satisfaction, and the menthol feeling factor can be a numerical value of the intensity of the menthol feeling.

The smoking taste feeling information may be information obtained by such sensory evaluation, or may be information obtained by chemical analysis such as component analysis.

The inhaler flag is data for distinguishing whether the corresponding brand is a brand of a cartridge product or a brand of any other tobacco product. In the example in Fig. 8, the inhaler flag is set for brand information of cartridge products (indicated by the check sign), and the inhaler flag is not set for brand information of tobacco products other than cartridge products. Specifically, brand information having the brand IDs "5001", "5002", and "5003" indicates brands of cartridge products, and brand information having the brand IDs "0001", "0002", and "0003" indicates brands of tobacco products other than cartridge products.

The brand information of cartridge products stored in the brand master table and the store-specific brand information table includes, in addition to the setting of the inhaler flag, a brand ID, a brand name, a brand image, a price, a pack quantity, a pack code, a carton code, a manufacturer ID, and smoking taste feeling information, but may not include the setting of the amount of tar or the amount of nicotine. In contrast, the brand information of tobacco products other than cartridge products does not include the setting of the inhaler flag, but includes the setting of a brand ID, a brand name, a brand image, a price, an amount of tar, an amount of nicotine, a pack quantity, a pack code, a carton code, a manufacturer ID, and smoking taste feeling information.

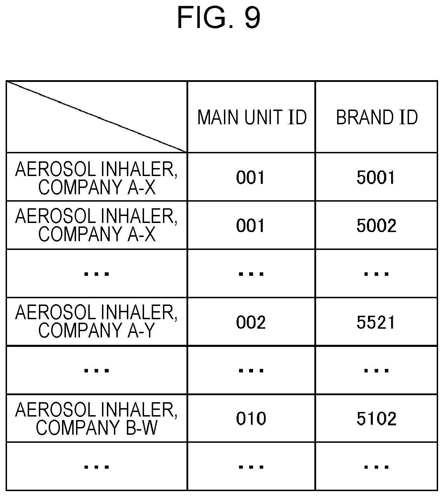

Fig. 9 is a diagram illustrating an example of a cartridge product identification table. In the first embodiment, the cartridge product identification information is stored in the cartridge product identification table exemplarily illustrated in Fig. 9.

The cartridge product identification information includes a main unit ID that can identify a model of a main unit of an aerosol inhaler, and a brand ID of a cartridge product usable with the main unit. In other words, the cartridge product identification information indicates a combination of a main unit intended by the manufacturer and a brand of a cartridge product dedicated to the main unit.

In the example in Fig. 9, cartridge products of brands having the brand IDs "5001" and "5002" are usable with the main unit (main unit ID = 001) of "aerosol inhaler, company A-X" sold by company A; a cartridge product of a brand having the brand ID "5521" is usable with the main unit (main unit ID = 002) of "aerosol inhaler, company A-Y" sold by company A; and a cartridge product of a brand having the brand ID "5102" is usable with the main unit (main unit ID = 010) of "aerosol inhaler, company B-W" sold by company B.

According to the first embodiment, a combination of a main unit and a cartridge product that is not included in the cartridge product identification information can be determined as an unusable combination.

The support PC 10 obtains the latest cartridge product identification information from an external server device and reflects the latest cartridge product identification information in the cartridge product identification table. Accordingly, even when a new model of a main unit of an aerosol inhaler is released or a cartridge product of a new brand is released, the new information is stored in the cartridge product identification table.

The fixture setting information includes pack fixture management information, carton fixture management information, and so on.

The pack fixture management information stores a number of pieces of magazine information corresponding to the total number of magazines 500 disposed in the pack fixture 50, each of the pieces of magazine information being information in which a brand ID, the magazine ID of a corresponding magazine 500, and the remaining quantity are associated with each other.

The magazine ID is information for identifying a pack position notification LED 551 that gives a notification of the position of the target magazine 500. The correspondence relation between a magazine ID and a pack position notification LED 551 corresponding to the magazine ID is held by the first controller 30.

The carton fixture management information is information in which, for each of the accommodation areas formed in the carton fixture 60, position information of the accommodation area, a brand ID indicating the brand of carton products accommodated in the accommodation area, and the state of accommodation (presence or absence) of the carton products are associated with each other. The position information of each accommodation area included in the carton fixture management information is formed by, for example, the number of the drawer rack 61, the column number in the drawer rack 61 in the left-right direction, and the partition number in the drawer rack 61 in the front-rear direction. However, the position information of each accommodation area may be an accommodation area identifier that can identify each accommodation area as long as the position notification processing unit 41 of the second controller 40 can identify the carton location notification LED 62 corresponding to each of the accommodation areas.

The fixture support unit 101 communicates with the first controller 30 and the second controller 40 to support and manage the operation of the pack fixture 50 and the carton fixture 60.

When ordered brand information is acquired from the order terminal 20, the fixture support unit 101 sends an instruction regarding an ordered brand to the first controller 30 or the second controller 40 on the basis of the ordered brand information. Specifically, the fixture support unit 101 determines that the order unit is either the pack product or the carton product, or both on the basis of an order unit ID included in the ordered brand information. If the order unit includes the pack product, the fixture support unit 101 sends a removal instruction to the first controller 30. At this time, the fixture support unit 101 extracts, based on the brand ID of the ordered brand included in the ordered brand information, the magazine ID of the magazine 500 corresponding to the brand ID from the pack fixture management information included in the fixture setting information in the store DB 106 described above, and the magazine ID and the quantity included in the ordered brand information are included in the removal instruction.

If the order unit includes the carton product, on the other hand, the fixture support unit 101 sends a removal instruction to the second controller 40. At this time, the fixture support unit 101 extracts, based on the brand ID of the ordered brand included in the ordered brand information, the position information of the accommodation area corresponding to the brand ID from the carton fixture management information included in the fixture setting information in the store DB 106 described above, and the position information and the quantity included in the ordered brand information are included in the removal instruction.

Further, the terminal number of the order terminal 20 from which the ordered brand information is transmitted is included in the removal instruction by the fixture support unit 101. In the first embodiment, since only one order terminal 20 is provided, the fixed terminal number " 1" may be set in the removal instruction, or the removal instruction may include no terminal number.

After that, upon receipt of a notification of completion of removal from the first controller 30, the fixture support unit 101 updates, based on the remaining quantity included in the notification, the remaining quantity in the target magazine 500 in the pack fixture management information in the fixture setting information in the store DB 106. The target magazine 500 can be identified by the magazine ID set in the removal instruction. In addition, the fixture support unit 101 adds a record for removal of a pack product to the fixture event log in the store DB 106. In this record, the date and time, the fixture ID (the pack fixture 50), the event ID (removal), the brand ID (brand ID of the ordered brand), and the quantity (quantity for the ordered brand) are set.

After that, upon receipt of a notification of completion of removal from the second controller 40 (the operation determination unit 42), the fixture support unit 101 clears the brand ID in the record for the target accommodation area in the carton fixture management information in the fixture setting information in the store DB 106, and updates the state of accommodation to "absent". The target accommodation area can be identified by a record in which the brand ID of the ordered brand set in the removal instruction is set. In addition, the fixture support unit 101 adds a record for removal of a carton product to the fixture event log in the store DB 106. In this record, the date and time, the fixture ID (the carton fixture 60), the event ID (removal), the brand ID (brand ID of the ordered brand), and the quantity (quantity for the ordered brand) are set.

In response to a replenishment request operation being performed using the fixture management terminal 70, the fixture support unit 101 determines whether a replenishment brand designated as a target in the replenishment request operation has been allocated to any of the magazines 500 of the pack fixture 50 or any of the accommodation areas of the carton fixture 60, and then sends an instruction regarding the replenishment brand to the first controller 30 or the second controller 40. The replenishment brand refers to a brand of a tobacco product for replenishment.

When the replenishment instruction is sent to the first controller 30, in the pack fixture 50, the pack position notification LED 551 corresponding to the magazine ID is lit in a lighting color corresponding to replenishment. After that, upon receipt of a notification of completion of replenishment from the first controller 30, the fixture support unit 101 updates, based on the quantity included in the notification, the remaining quantity in the target magazine 500 in the pack fixture management information in the fixture setting information in the store DB 106.

When the replenishment instruction is sent to the second controller 40, in the carton fixture 60, a carton location notification LED 62 that gives a notification of the position of the accommodation area to which the brand ID of the replenishment brand is allocated is turned on, and the locking mechanism for the drawer rack 61 having the accommodation area is set to unlocked state. As a result, the accommodation area can be replenished with a carton product. After that, upon receipt of a notification of completion of replenishment from the second controller 40, the fixture support unit 101 sets the brand ID of the replenishment brand in the record for the target accommodation area in the carton fixture management information in the fixture setting information in the store DB 106, and sets the state of accommodation to "present".

The customer management unit 102 mainly manages the customer registration information.

Specifically, when a customer ID is acquired from the order terminal 20, the customer management unit 102 extracts the main smoking brand ID corresponding to the customer ID from the customer management DB 105, and sends brand information including at least the extracted main smoking brand ID and the inhaler flag corresponding thereto to the order terminal 20. If the customer management DB 105 does not store the main smoking brand ID corresponding to the customer ID, the customer management unit 102 sends, to the order terminal 20, main-smoking-brand-unspecified information indicating that the main smoking brand ID is unspecified.

Accordingly, when the main smoking brand ID is sent to the order terminal 20, as described below, the order terminal 20 outputs a display (brand order screen described below) that facilitates easy ordering of a tobacco product of a brand identified by the main smoking brand ID.

If a plurality of main smoking brand IDs are associated with a customer ID in the customer management DB 105, the customer management unit 102 extracts the plurality of main smoking brand IDs from the customer management DB 105, and sends a plurality of pieces of brand information including the extracted plurality of main smoking brand IDs and the inhaler flags corresponding thereto to the order terminal 20.

Accordingly, the order terminal 20 provides a display to enable an operation of collectively designating tobacco products of a plurality of brands identified by the plurality of main smoking brand IDs. Thus, even a smoker (customer) who changes from brand to brand depending on the environment, situation, or the like is able to easily designate a tobacco product of a desired brand using the order terminal 20.

Further, when a customer ID is acquired from the order terminal 20, the customer management unit 102 extracts the purchase history information corresponding to the customer ID from the customer management DB 105, and sends the extracted purchase history information to the order terminal 20. At this time, the customer management unit 102 may extract all of purchase history information and transmit it to the order terminal 20, or may extract part of the purchase history information such as purchase history information for the most recent predetermined period and transmit it to the order terminal 20.

The order terminal support unit 103 supports processing in the order terminal 20 and, in particular, manages various screens to be displayed on the order terminal 20. For example, the order terminal support unit 103 generates or updates screen data of a brand selection screen to be displayed on the order terminal 20, and transmits the screen data to the order terminal 20. The screen data includes, for example, brand information such as brand IDs, pack codes, carton product codes, and inhaler flags related to brands of tobacco products displayed on the brand selection screen.

When a tobacco product of a new brand is supplied, the order terminal support unit 103 automatically updates the screen data of the brand selection screen so that the tobacco product of the new brand can be selected on the brand selection screen on the order terminal 20, and sends the updated screen data to the order terminal 20. When tobacco products of a brand for which trading is suspended are collectively dispensed, the order terminal support unit 103 automatically updates the screen data of the brand selection screen so as to prevent the tobacco products of the brand for which trading is suspended from being selected on the brand selection screen on the order terminal 20, and transmits the updated screen data to the order terminal 20.

To change the brand selection screen, various forms of screen data to be sent from the order terminal support unit 103 to the order terminal 20 and various forms of methods for displaying the changed brand selection screen on the order terminal 20 are conceivable, and these forms are not limited in any way in the first embodiment. For example, brand information including brand names, brand images, and so on and position information for displaying the brand information may be sent to the order terminal 20 as screen data, and the order terminal 20 may automatically change the brand selection screen on the basis of the screen data and display the changed brand selection screen. Furthermore, the order terminal support unit 103 may generate Web page data of the brand selection screen using HTML (HyperText Markup Language), XML (Extensible Markup Language), or the like and send the data to the order terminal 20, and the order terminal 20 may read the data and display the brand selection screen on a browser.

Further, the order terminal support unit 103 transmits the cartridge product identification information (see Fig. 9) stored in the cartridge product identification table in the customer management DB 105 to the order terminal 20. Each time the cartridge product identification table is updated, the order terminal support unit 103 may transmit new cartridge product identification information to the order terminal 20.

The management operation processing unit 104 manages the fixture management terminal 70 and, in particular, performs control of display or the like of the fixture management terminal 70, management of information related to the pack fixture 50 or the carton fixture 60, which is set by an operation performed on the fixture management terminal 70, and other processing.

### [Order Terminal]

The order terminal 20 includes an information acquisition unit 201, a display processing unit 202, an order receiving unit 203, and so on. These are software elements and are embodied by the CPU 21 executing a control program stored in the memory 22, such as a RAM or a ROM.

The information acquisition unit 201 is capable of acquiring a captured image from the imaging unit 26 and is further capable of acquiring, from the communication unit 25, customer information received from the mobile terminal of the customer.

When the acquired captured image represents a barcode on packaging of a tobacco product, the information acquisition unit 201 can apply an existing barcode reading process to the captured image to acquire a JAN code.

When the acquired captured image represents a two-dimensional code (such as QR code (registered trademark)) displayed on the mobile terminal of the customer, the information acquisition unit 201 can apply an existing two-dimensional code reading process to the captured image to acquire a brand ID of a main smoking brand or a JAN code. In this case, a dedicated application is provided. The application is installed into the mobile terminal of the customer and executed, and accordingly a two-dimensional code produced by encoding the main smoking brand ID of the customer stored in the mobile terminal can be displayed on the mobile terminal. The customer captures an image of the displayed two-dimensional code using the imaging unit 26 of the order terminal 20, and accordingly the information acquisition unit 201 can acquire the main smoking brand ID from the two-dimensional code.

When the acquired captured image is a biometric image (for example, a vein image) for biometric authentication, the information acquisition unit 201 can acquire biometric identification information from the biometric image. The acquired biometric identification information may be used directly as a customer ID or may be used for user authentication. The information acquisition unit 201 sends the acquired biometric identification information to the support PC 10.

The information acquisition unit 201 can further acquire a customer ID from the customer information acquired via communication. Also in this case, the dedicated application installed in the mobile terminal of the customer is executed, and accordingly the customer ID can be sent from the mobile terminal to the order terminal 20 via short-range wireless communication or the like.

The information acquisition unit 201 can also acquire, from an IC card carried by the customer as electronic money or the like, an identification number (such as an IC card ID) registered in the IC card, via short-range wireless communication or the like, as a customer ID.

Accordingly, the information acquisition unit 201 can be referred to as an identifier acquisition means for acquiring a customer identifier (customer ID) that can identify a customer or a portable object carried by the customer (such as a mobile terminal or an IC card).

The information acquisition unit 201 sends the acquired customer ID to the support PC 10.

The display processing unit 202 causes the display unit of the touch panel unit 23 to display a brand order screen in addition to the brand selection screen described above. When a user operation performed on the brand selection screen or the brand order screen is detected by the touch sensor of the touch panel unit 23, the display processing unit 202 executes various processes corresponding to the detected user operation.

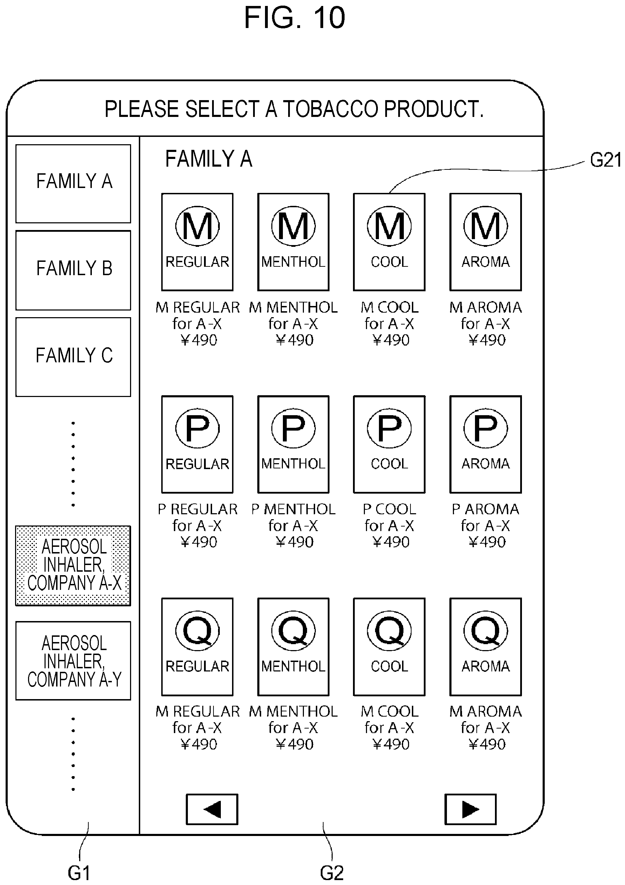

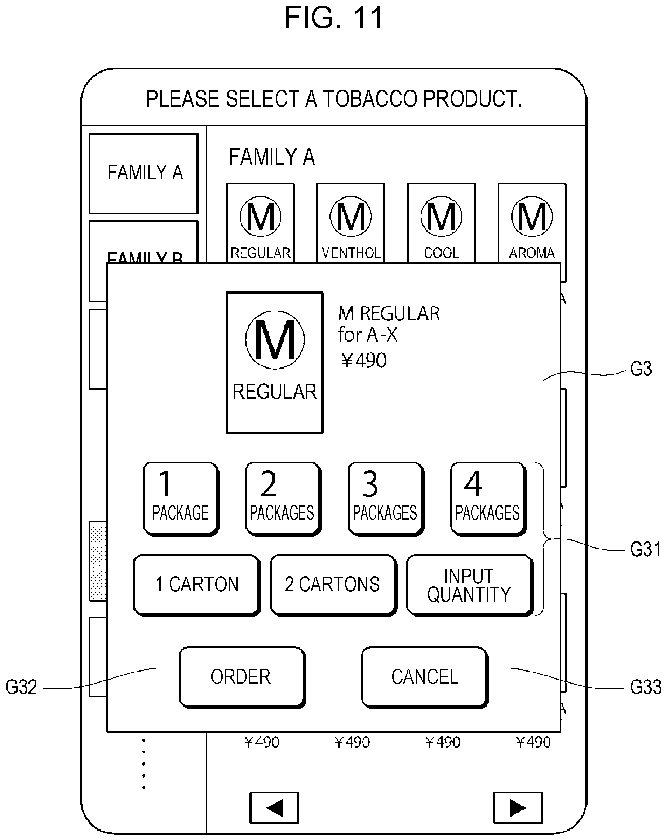

Fig. 10 is a diagram illustrating an example of the brand selection screen, and Fig. 11 is a diagram illustrating an example of the brand order screen.

The brand selection screen displayed on the order terminal 20 is formed of a brand group selection portion G1 for selecting a brand group, and an individual brand selection portion G2 that displays brand information of tobacco products of a plurality of brands belonging to the brand group selected in the brand group selection portion G1.

In the example in Fig. 10, brands of cartridge products are divided into brand groups according to models of main units of aerosol inhalers, and brands of tobacco products other than cartridge products are divided into brand groups (for example, "family A") according to a common name (for example, brand name "A") included in the respective brand names.

In the example in Fig. 10, in addition, the brand group "aerosol inhaler, company A-X" for cartridge products is selected in the brand group selection portion G1, and pieces of brand information of cartridge products of all the brands usable with the model of the main unit corresponding to the brand group, namely, "aerosol inhaler, company A-X", are displayed in the individual brand selection portion G2 in a predetermined sequence. If not all of the pieces of brand information are displayable within one screen, groups of pieces of brand information, which are subsets of the brand group "aerosol inhaler, company A-X", are sequentially displayed by scrolling or the like.

When operating the order terminal 20 to order a tobacco product of a desired brand, the customer or salesperson operates such a brand selection screen to search for the desired brand, and presses an image portion representing the desired brand in the brand selection screen. As a result, a brand order screen G3 as illustrated in Fig. 11 for a tobacco product of the brand is displayed in pop-up window.

Fig. 11 exemplarily illustrates a brand order screen for a brand of a cartridge product.

The brand order screen G3 is a screen for confirming an order placed for the tobacco product of the brand selected on the brand selection screen. The brand order screen G3 includes brand information of the tobacco product of the selected brand, and also includes an order unit designating portion G31, an order confirmation operation portion G32, and an order cancellation operation portion G33.

The order unit designating portion G31 includes "1 package", "2 packages", "3 packages", and "4 packages" buttons, each indicating the order quantity of a pack product, and "1 carton" and "2 cartons" buttons, each indicating the order quantity of a carton product, such that the order quantity can be designated by single operation. This allows the customer or salesperson to input the order unit and the quantity by simple operation without performing a complex operation such as inputting the quantity. In contrast, to designate any other order unit, "input quantity" is selected to display another screen for inputting the quantity of pack products or carton products.

By pressing the order confirmation operation portion G32, the customer or the salesperson can order the tobacco product of the selected brand in the designated order unit and quantity.

If the information acquisition unit 201 acquires a brand ID or a JAN code, the display processing unit 202 can display a state similar to a state in which a tobacco product of a brand identified by the brand ID or the JAN code is selected on the brand selection screen described above, that is, can directly display the brand order screen G3 for the tobacco product of the brand on the brand selection screen, without requiring an operation of selecting a desired brand on the brand selection screen.

Also, if a main smoking brand ID is acquired from the support PC 10 (the customer management unit 102) in response to a customer ID being sent from the information acquisition unit 201 to the support PC 10, the display processing unit 202 can directly display the brand order screen G3 for a tobacco product of a brand identified by the main smoking brand ID on the brand selection screen in a way similar to that described above.

This allows the customer to easily order the tobacco product of the desired brand by causing the customer mobile terminal to communicate with the order terminal 20, causing the order terminal 20 to capture an image of their own biometric information, or causing the order terminal 20 to capture an image of a two-dimensional code displayed on the mobile terminal, without performing an operation of searching for the tobacco product of the desired brand from tobacco products of a plurality of brands.

As described above, the display processing unit 202 can be referred to as a second acquisition means for acquiring specific brand information indicating a cartridge product of a brand (main smoking brand) registered for a customer, which is stored in a customer information storage unit (the customer management DB 105).

Alternatively, if a plurality of main smoking brand IDs are acquired from the support PC 10 (the customer management unit 102), the display processing unit 202 may directly display a collective brand order screen on the brand selection screen to enable tobacco products of a plurality of brands identified by the plurality of main smoking brand IDs to be ordered collectively.

For example, the collective brand order screen is separated into areas, each for a corresponding one of tobacco products of a plurality of brands, each area including brand information and an order unit designating portion. The collective brand order screen can further be formed to include an order confirmation operation portion and an order cancellation operation portion.

The customer or salesperson presses the order confirmation operation portion after designating an order unit for tobacco products of one or more brands (or all brands) that they wish to order among tobacco products of a plurality of brands displayed on the collective brand order screen, thereby being able to order the tobacco products of the one or more brands, for which the order unit is designated, in the designated order unit and quantity.

If main-smoking-brand-unspecified information is acquired from the support PC 10 (the customer management unit 102), the display processing unit 202 displays the brand selection screen.

When an operation of pressing the order confirmation operation portion G32 is performed and, as described below, ordered brand information is sent from the order receiving unit 203 to the support PC 10, the display processing unit 202 cancels the brand order screen.

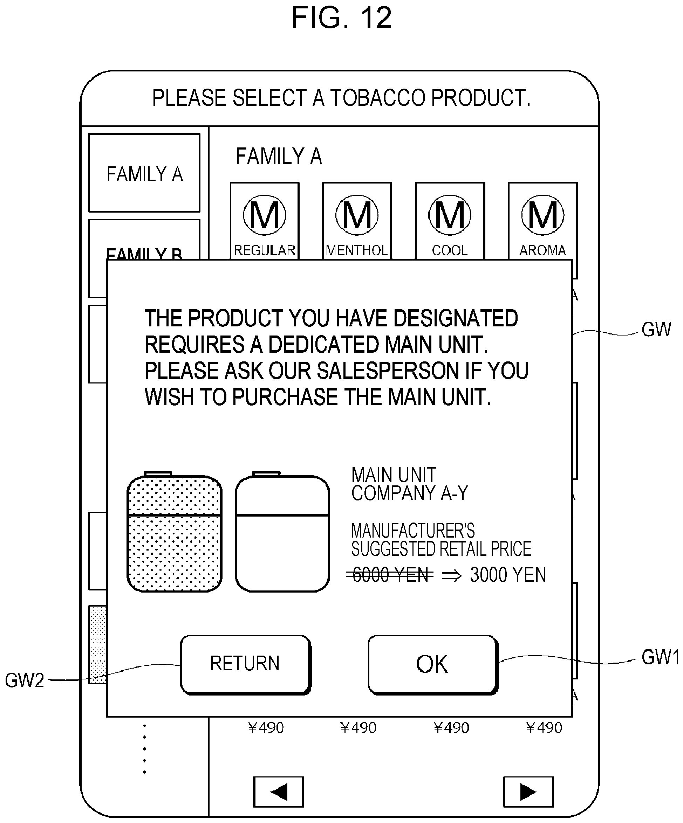

Fig. 12 is a diagram illustrating an example of a warning screen related to a main unit of an aerosol inhaler.

When an operation of selecting a brand of a cartridge product is performed on the brand selection screen and a predetermined condition is satisfied, the display processing unit 202 displays a warning screen related to the main unit of the aerosol inhaler as exemplarily illustrated in Fig. 12.

Specifically, upon detection of a selection operation performed on the brand selection screen, first, the display processing unit 202 determines whether the selected brand targeted by the selection operation is a brand of a cartridge product. This determination can be performed using the inhaler flag included in the brand information of the selected brand. If the selected brand is a brand of a cartridge product, the display processing unit 202 further determines whether the main smoking brand ID of the customer who has performed the selection operation has been acquired. If the main smoking brand ID has been acquired, the display processing unit 202 determines, based on the inhaler flag corresponding to the main smoking brand ID, whether the brand indicated by the main smoking brand ID is a brand of a cartridge product. If the selected brand is a brand of a cartridge product and the brand indicated by the main smoking brand ID is a brand of a cartridge product, the display processing unit 202 further determines, based on the cartridge product identification information sent from the support PC 10, whether the main unit ID corresponding to the main smoking brand ID is also associated with the brand ID of the selected brand. In other words, this determination is a determination as to whether a cartridge product of the selected brand is usable with a model of a main unit with which a cartridge product of the brand indicated by the main smoking brand ID is usable.

Accordingly, if the main unit ID corresponding to the main smoking brand ID is not associated with the brand ID of the selected brand, that is, if a cartridge product of the selected brand is not usable with a model of a main unit with which a cartridge product of the brand indicated by the main smoking brand ID is usable, the display processing unit 202 causes the warning screen described above to be displayed.

Since a cartridge product of a brand registered as the main smoking brand ID is a tobacco product frequently purchased by the customer, the customer should possess a main unit with which a cartridge product of the brand indicated by the main smoking brand ID is usable. Accordingly, if a cartridge product of the selected brand is not usable with a model of a main unit with which a cartridge product of the brand indicated by the main smoking brand ID is usable, it is highly likely that the customer does not own a main unit with which the cartridge product of the selected brand is usable. In this case, display of a warning screen related to the main unit of the aerosol inhaler can prevent a cartridge product unusable with the main unit possessed by the customer from being purchased by mistake.

If the main smoking brand ID has not been registered and the main smoking brand ID has not been acquired, the display processing unit 202 may estimate the model of the main unit of the aerosol inhaler owned by the customer by using the purchase history information of the customer. A customer who has once purchased a cartridge product is highly likely to own a main unit with which the purchased cartridge product is usable. Since a purchase that is made only once can be wrong, it is more preferable to estimate, on the basis of the fact that a customer has purchased cartridge products of one or more brands usable with a main unit of the same model twice or more, that the customer owns a main unit of this model.

The display processing unit 202 identifies the brand ID of the cartridge product included in the purchase history information, and determines, based on the cartridge product identification information, whether the main unit ID corresponding to the identified brand ID is also associated with the brand ID of the selected brand. At this time, the display processing unit 202 may identify the brand ID of the cartridge product that is associated with the same main unit ID and that has been purchased twice or more, or may identify the brand ID of the cartridge product that has been purchased most recently.

If the main unit ID corresponding to the brand ID identified from the purchase history information is not associated with the brand ID of the selected brand, the display processing unit 202 causes the warning screen described above to be displayed.

Accordingly, the display processing unit 202 can be referred to a second acquisition means for acquiring specific brand information indicating a cartridge product of a brand extracted from purchase history information of a customer, which is stored in a purchase history storage unit (the customer management DB 105) in association with an acquired customer identifier (customer ID).

As described above, even for a customer whose main smoking brand has not been registered, the model of a main unit owned by the customer is estimated from the purchase history, and the warning screen described above is displayed, which can prevent a cartridge product unusable with the main unit possessed by the customer from being purchased by mistake.

As described above, in the first embodiment, it is determined whether to display a warning screen related to the main unit of the aerosol inhaler by determining whether a common main unit ID is associated with specific brand information (such as the main smoking brand ID and the brand ID extracted from purchase history information) based on the cartridge product identification information (see Fig. 9) and the brand ID of the selected brand. Thus, the display processing unit 202 can be referred to as an output processing means for performing predetermined determination using at least acquired specific brand information and acquired selected brand information to determine whether to cause an interface unit to output predetermined information related to the main unit of the aerosol inhaler.

Fig. 12 exemplarily illustrates a warning screen displayed when a brand of a cartridge product dedicated to the model "company A-Y" of a main unit is selected through an operation on the brand selection screen, and the warning screen presents information (a model name, a photograph of the main unit, and a sales price) on the model "company A-Y" of the main unit.

In this manner, the warning screen may present information related to the main unit with which a cartridge product of a brand selected through a selection operation on the brand selection screen is usable.

This enables the customer to know the model of a main unit necessary for the cartridge product of the selected brand and to purchase the main unit together with the cartridge product of the selected brand, as necessary. That is, the customer can be prevented from failing to use a cartridge product that the customer has purchased.

However, as in the example in Fig. 12, a screen that does not include a warning such as "... requires a dedicated main unit.... " and that presents only information related to the main unit may be displayed. Conversely, a screen that does not include information related to the main unit and includes only a warning may be displayed.

Upon detection of an operation of pressing a confirmation operation portion (OK) GW1 on a warning screen GW, the display processing unit 202 cancels the warning screen GW and displays the brand order screen G3. In contrast, upon detection of an operation of pressing a return operation portion (return) GW2, the display processing unit 202 cancels the warning screen GW without displaying the brand order screen G3.

As described above, in the first embodiment, the warning screen GW is displayed after an operation of selecting a brand of a cartridge product on the brand selection screen and before the brand order screen G3 is displayed. However, the display timing of the warning screen GW is not limited to that in the illustrated example. For example, the warning screen GW may be displayed after an operation of pressing the order confirmation operation portion G32 on the brand order screen G3 is detected. In this case, it is desirable that an order is confirmed in response to detection of an operation of pressing the confirmation operation portion GW1 on the warning screen GW and that the order is canceled upon detection of an operation of pressing the cancellation operation portion GW2.

Upon detection of an operation of pressing the order confirmation operation portion G32 on the brand order screen G3, the order receiving unit 203 identifies the brand ID of the selected tobacco product, the order unit ID indicating a pack product or a carton product, or both, and the quantity.

The order receiving unit 203 sends ordered brand information including the identified brand ID, order unit ID indicating a pack product or a carton product, or both, and quantity to the support PC 10. The ordered brand information is acquired by the fixture support unit 101 of the support PC 10, and the pack fixture 50 or the carton fixture 60 is controlled.

In contrast, upon the order cancellation operation portion G33 on the brand order screen G3 being pressed, the brand order screen G3 is canceled, and the selected brand, quantity, and the like are cleared.

### [Example Operation of Support PC 10]

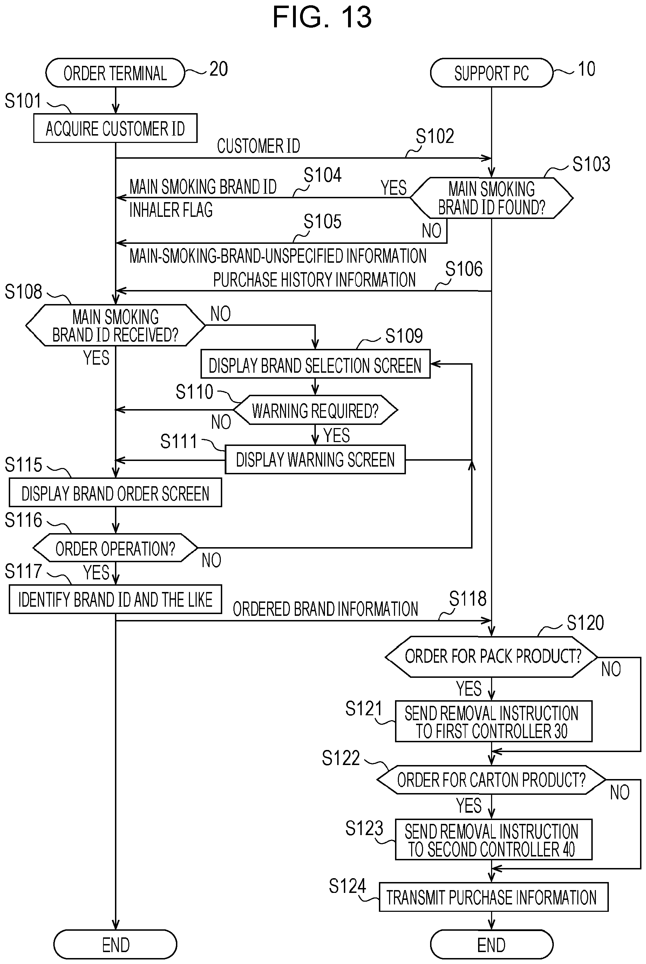

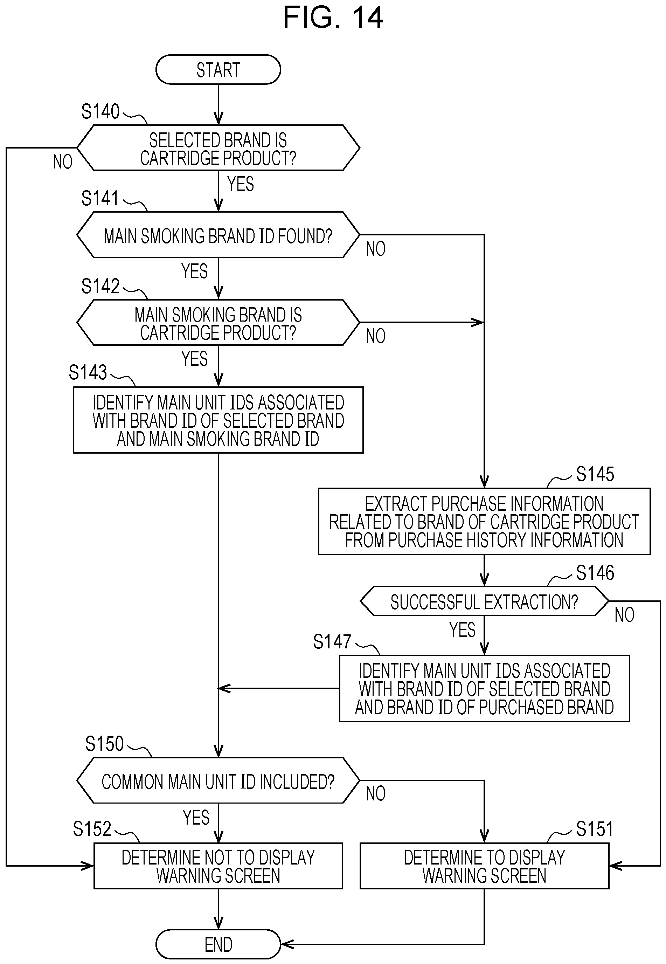

Next, an example operation of the present system 1 will be described. An example operation of the support PC 10 and the order terminal 20 when a tobacco product is ordered using the order terminal 20 will be described with reference to Fig. 13 and Fig. 14, in particular. Fig. 13 is a sequence chart illustrating an example operation related to ordering and removal of a tobacco product in the tobacco product management system according to the first embodiment.

It is assumed here that in response to a customer holding their own mobile terminal or IC card over the order terminal 20, a customer ID is sent from the mobile terminal to the order terminal 20 via wireless communication.

The order terminal 20 (the information acquisition unit 201) acquires a customer ID from the mobile terminal of the customer via wireless communication (S 101). The order terminal 20 sends the acquired customer ID to the support PC 10 (S102).

Upon receipt of the customer ID from the order terminal 20, the support PC 10 (the customer management unit 102) searches the customer management DB 105 for the customer ID and determines whether a main smoking brand ID is associated with the customer ID (S103). If a main smoking brand ID is associated with the customer ID (S103; YES), the support PC 10 extracts the main smoking brand ID. If no main smoking brand ID is associated with the customer ID (S103; NO), the support PC 10 generates main-smoking-brand-unspecified information.

In addition, the support PC 10 (the customer management unit 102) extracts brand information (including at least the inhaler flag) associated with the main smoking brand ID from the brand information or the like in the store-specific brand information table in the store DB 106.

If the main smoking brand ID is extracted (S103; YES), the support PC 10 (the customer management unit 102) transmits the main smoking brand ID and the brand information including at least the inhaler flag to the order terminal 20 (S104). If the main smoking brand ID is not extracted (S103; NO), the support PC 10 (the customer management unit 102) transmits the main-smoking-brand-unspecified information to the order terminal 20 (S105).

Further, the support PC 10 (the customer management unit 102) extracts all or part of the purchase history information associated with the customer ID from the purchase history table in the customer management DB 105, and transmits the extracted all or part of the purchase history information to the order terminal 20 (S107).

If the main smoking brand ID is received from the support PC 10 (S108; YES), the order terminal 20 (the display processing unit 202) displays the brand order screen G3 for a tobacco product of a brand identified by the main smoking brand ID on the brand selection screen without requiring a selection operation on the brand selection screen (S115).

On the other hand, if the main-smoking-brand-unspecified information is received from the support PC 10 (S108; NO), the order terminal 20 (the display processing unit 202) displays the brand selection screen (S109).

In response to an operation of pressing an image portion representing the desired brand on the brand selection screen, the order terminal 20 (the display processing unit 202) determines whether to display the warning screen GW (see Fig. 12) (S110). This determination will be described in detail below with reference to Fig. 14.

If it is determined that the warning screen GW is to be displayed (S110; YES), the order terminal 20 (the display processing unit 202) displays the warning screen GW related to a main unit with which a cartridge product of a brand (referred to as the selected brand) targeted by the pressing operation is usable (S111). On the other hand, if it is determined that the warning screen GW is not to be displayed (S110; NO), the order terminal 20 (the display processing unit 202) displays the brand order screen G3 related to a tobacco product of the selected brand in a pop-up window (S115).

In a case where the warning screen GW is displayed, in response to an operation of pressing the confirmation operation portion GW1 on the warning screen GW, the order terminal 20 (the display processing unit 202) cancels the warning screen GW and displays the brand order screen G3 related to the tobacco product of the selected brand in a pop-up window (S115).

In response to an operation of pressing the cancellation operation portion GW2 on the warning screen GW, the order terminal 20 (the display processing unit 202) cancels the warning screen GW without displaying the brand order screen G3 (returning to S109).

If either or both of the order quantity of a pack product and the order quantity of a carton product are designated as the order unit on the brand order screen G3 and the order confirmation operation portion G32 is pressed (S116; YES), the order terminal 20 (the order receiving unit 203) identifies the brand ID of the selected tobacco product, the order unit ID indicating a pack product or a carton product, or both, and the quantity (S117).

On the other hand, if an operation of pressing the order cancellation operation portion G33 on the brand order screen G3 is performed (S116; NO), the brand order screen G3 is canceled (returning to S109).

Thus, the brand ID identified in (S117) may be the main smoking brand ID itself transmitted in (S104), or may be different from the main smoking brand ID. The latter case is, for example, a case where the order cancellation operation portion G33 is operated on a brand order screen displayed for a tobacco product of a main smoking brand and the order confirmation operation portion G32 is operated on a brand order screen displayed in response to a tobacco product of another brand being selected on the brand selection screen.

The order terminal 20 (the order receiving unit 203) sends ordered brand information including the identified brand ID, order unit ID indicating a pack product or a carton product, or both, and quantity to the support PC 10 (S118).

Upon detection of an operation of the order confirmation operation portion G32, the brand order screen is canceled.

Upon receipt of the ordered brand information from the order terminal 20, the support PC 10 (the fixture support unit 101) determines, based on the order unit ID included in the ordered brand information, whether the order unit includes a pack product (S120). If a pack product is included (S120; YES), the support PC 10 (the fixture support unit 101) sends a removal instruction to the first controller 30 (S121). At this time, the support PC 10 (the fixture support unit 101) extracts, based on the brand ID of the ordered brand included in the ordered brand information, the magazine ID of the magazine 500 corresponding to the brand ID from the pack fixture management information included in the fixture setting information in the store DB 106, and the magazine ID, the quantity included in the ordered brand information, and terminal number (1) are included in the removal instruction.

As a result, in accordance with the removal instruction, the first controller 30 (the position notification processing unit 31) turns on the pack position notification LED 551 corresponding to the magazine ID in the pack fixture 50, and gives a notification of the position of the magazine 500 that accommodates pack products of the brand identified by the brand ID.

On the other hand, the support PC 10 (the fixture support unit 101) determines whether the order unit includes a carton product (S122). If the order unit includes a carton product (S122; YES), the support PC 10 (the fixture support unit 101) sends a removal instruction to the second controller 40 (S123). At this time, the support PC 10 (the fixture support unit 101) extracts, based on the brand ID of the ordered brand included in the ordered brand information, the position information of the accommodation area corresponding to the brand ID from the carton fixture management information included in the fixture setting information in the store DB 106, and the position information and the quantity included in the ordered brand information are included in the removal instruction.

Accordingly, the second controller 40 (the position notification processing unit 41) turns on the carton location notification LED 62 corresponding to the position information in accordance with the position information included in the removal instruction.

Then, the support PC 10 (the fixture support unit 101) transmits purchase information to a customer management server device external to the present system 1 to hold purchase history information (S124). In the purchase information, in addition to the customer ID, the removal date and time is set as the purchase date and time, the brand ID of the ordered brand is set as the purchase brand ID, and the quantity for the ordered brand is set as the purchase quantity.

Fig. 14 is a flowchart illustrating a display determination method (the details of step (S110) in Fig. 13) of the warning screen related to the main unit of the aerosol inhaler in the first embodiment. In the first embodiment, the method illustrated in Fig. 14 is executed by the order terminal 20 (the display processing unit 202).

Upon detection of a selection operation performed on the brand selection screen, first, the order terminal 20 determines whether the selected brand targeted by the selection operation is a brand of a cartridge product (S 140). This determination can be performed using the inhaler flag included in the brand information of the selected brand.

If the selected brand is not a brand of a cartridge product (S140; NO), it is determined that the warning screen is not to be displayed (S152).

If the selected brand is a brand of a cartridge product (S140; YES), the order terminal 20 further determines whether the main smoking brand ID of the customer who has performed the selection operation has been acquired (S141).

If the main smoking brand ID has been acquired (S141; YES), the order terminal 20 determines, based on the inhaler flag corresponding to the main smoking brand ID, whether the brand indicated by the main smoking brand ID is a brand of a cartridge product (S142).

If the selected brand is a brand of a cartridge product (S140; YES) and the main smoking brand is a brand of a cartridge product (S142; YES), the order terminal 20 identifies, based on the cartridge product identification information sent from the support PC 10, main unit IDs associated with the brand ID of the selected brand and the main smoking brand ID (S143).

The order terminal 20 determines whether the main unit ID identified for the selected brand and the main unit ID identified for the main smoking brand include a common main unit ID (S 150). If a single main unit ID is identified as both main unit IDs, it is determined whether the two main unit IDs match (S150). In other words, as described above, the determination (S150) is a determination as to whether a cartridge product of the selected brand is usable with the model of a main unit with which a cartridge product of a main smoking brand is usable.

If a common main unit ID is included or the two main unit IDs match (S150; YES), the order terminal 20 determines not to display the warning screen GW (S152). If a common main unit ID is not included or the two main unit ID do not match (S150; NO), the order terminal 20 determines to display the warning screen GW (S151).

If the main smoking brand ID has not been acquired (S141; NO) or if the main smoking brand indicated by the acquired main smoking brand ID is not a brand of a cartridge product (S142; NO), the order terminal 20 extracts purchase information related to the brand of the cartridge product from the purchase history information (S145).

If the purchase information related to the brand of the cartridge product is included in the purchase history information and extraction of the purchase information is successful (S146; YES), the order terminal 20 identifies, based on the cartridge product identification information sent from the support PC 10, main unit IDs associated with the brand ID of the selected brand and the brand ID (the brand ID of the purchased brand) indicated by the extracted purchase information (S147).

If the purchase information related to the brand of the cartridge product is not included in the purchase history information and extraction of the purchase information has failed (S146; NO), the order terminal 20 determines to display the warning screen GW (S151). This is because it is predicted, from no history of purchase of cartridge products, that it is highly likely that the customer does not own a main unit with which a cartridge product of the selected brand is usable.

The order terminal 20 determines whether the main unit ID identified for the selected brand and the main unit ID identified for the brand (purchased brand) indicated by the purchase information include a common main unit ID (S150). If a single main unit ID is identified as both main unit IDs, it is determined whether the two main unit IDs match (S150). In other words, the determination (S150) in this case is a determination as to whether a cartridge product of the selected brand is usable with the model of a main unit with which a cartridge product of a purchased brand (brand that has previously been purchased) is usable.

If a common main unit ID is included or the two main unit IDs match (S150; YES), the order terminal 20 determines not to display the warning screen GW (S152). If a common main unit ID is not included or the two main unit ID do not match (S150; NO), the order terminal 20 determines to display the warning screen GW (S151).

### «Second Embodiment»

A tobacco product management system (present system) 1 according to a second embodiment will be described hereinafter with focus on differences from the first embodiment. In the following description, content similar to that of the first embodiment will be omitted as appropriate.

In the second embodiment, a system configuration, a hardware configuration, and a processing configuration are similar to those in the first embodiment, and the second embodiment is different from the first embodiment in that a main unit ID of a main unit of an aerosol inhaler owned by a customer is managed in association with a customer ID.

### [Support PC]

The customer registration information stored in the customer information table in the customer management DB 105 further includes one or more customer main unit IDs in addition to a customer ID and a main smoking brand ID. That is, when the customer possesses a plurality of models of main units of aerosol inhalers, the customer registration information of the customer includes a plurality of customer main unit IDs. The customer registration information is managed by a customer management server device external to the present system 1 and is reflected in the customer management DB 105.

For example, when the customer purchases a main unit of an aerosol inhaler, the customer may register information related to the purchased main unit in a customer management server device. When the main unit has a communication function, the main unit may spontaneously transmit device information thereof to the customer management server device.

In the second embodiment, the customer registration information may include no main smoking brand ID.

When a cartridge product of the selected brand is ordered, the customer management unit 102 can register the main unit ID of a main unit with which the cartridge product of the selected brand is usable in the customer management server device in association with the customer ID of the customer. As a result, customer registration information including the main unit ID as a customer main unit ID is reflected in the customer management DB 105.

For example, after the display of the warning screen GW described above, in response to the ordered brand information of the cartridge product of the selected brand being transmitted from the order terminal 20 to the support PC 10 upon pressing of the confirmation operation portion GW1 on the warning screen GW, the customer management unit 102 performs control to register the main unit ID of the main unit with which the cartridge product of the selected brand is usable in the customer management server device in association with the customer ID of the customer.

Thus, the customer management unit 102 can be referred to as a storage processing means for storing, in a customer information storage unit (the customer management DB 105), a main unit identifier (main unit ID) that can identify a specific main unit (a main unit owned by the customer), and the customer management unit 102 can be referred to as a storage processing means for storing the identifier of a main unit with which a cartridge product of the brand indicated by the selected brand information is usable in the customer information storage unit as a main unit identifier, in response to a predetermined operation performed by the customer after the predetermined information (the warning screen GW) is output to the interface unit.

This enables information related to a main unit possessed by the customer to be automatically registered in the present system 1 without requiring the work of the customer to register the main unit.

When a customer ID is acquired from the order terminal 20, the customer management unit 102 extracts the main smoking brand ID and the customer main unit ID corresponding to the customer ID from the customer management DB 105, and sends the main smoking brand ID and the customer main unit ID to the order terminal 20. At this time, the inhaler flag corresponding to the main smoking brand ID may or may not be sent to the order terminal 20. On the other hand, if the customer main unit ID corresponding to the customer ID is not stored, the customer management unit 102 sends, to the order terminal 20, main-unit-unspecified information indicating that the customer main unit ID is unspecified.

### [Order Terminal]

Also in the second embodiment, when an operation of selecting a brand of a cartridge product is performed on the brand selection screen and a predetermined condition is satisfied, the display processing unit 202 displays a warning screen related to the main unit of the aerosol inhaler as exemplarily illustrated in Fig. 12.

In the second embodiment, upon detection of a selection operation performed on the brand selection screen, first, the display processing unit 202 determines whether the selected brand targeted by the selection operation is a brand of a cartridge product. This determination can be performed using the inhaler flag included in the brand information of the selected brand. If the selected brand is a brand of a cartridge product, the display processing unit 202 further determines whether the customer main unit ID of the customer who has performed the selection operation has been acquired. If the customer main unit ID has been acquired, the display processing unit 202 determines, based on the cartridge product identification information sent from the support PC 10, whether the customer main unit ID is associated with the brand ID of the selected brand. In other words, this determination is a determination as to whether a cartridge product of the selected brand is usable with the model of the main unit corresponding to the customer main unit ID.

Accordingly, if the customer main unit ID is not associated with the brand ID of the selected brand, that is, if a cartridge product of the selected brand is not usable with the model of the main unit corresponding to the customer main unit ID, the display processing unit 202 causes the warning screen described above to be displayed.

As a result, as in the first embodiment, the second embodiment can also prevent a cartridge product unusable with the main unit possessed by the customer from being purchased by mistake.

As described above, the display processing unit 202 can be referred to as a second acquisition means for acquiring main unit information related to a specific main unit among a plurality of types of main units, and can also be referred to as an output processing means for causing, when the cartridge product of the brand indicated by the selected brand information is not usable with the specific main unit indicated by the acquired main unit information, the user interface unit to output predetermined information related to the main unit of the aerosol inhaler in accordance with the predetermined operation.

If the customer main unit ID has not been acquired, as in the first embodiment, the display processing unit 202 may estimate the model of the main unit of the aerosol inhaler owned by the customer by using the purchase history information of the customer. The processing in this case is similar to that in the first embodiment, and the description thereof will thus be omitted.

As described above, in the second embodiment, it is determined whether to display a warning screen related to the main unit of the aerosol inhaler by determining whether a customer main unit ID based on the cartridge product identification information (see Fig. 9) and the brand ID of the selected brand are associated with each other. Thus, the display processing unit 202 can be referred to as an output processing means for performing predetermined determination using at least acquired main unit information (customer main unit ID) and acquired selected brand information to determine whether to cause an interface unit to output predetermined information related to the main unit of the aerosol inhaler.

### [Example Operation of Support PC 10]

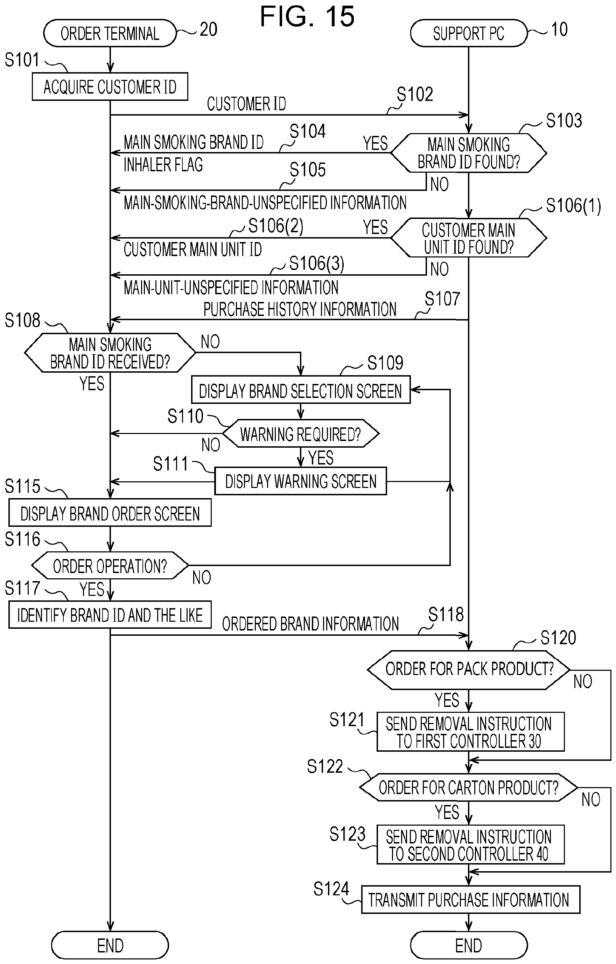

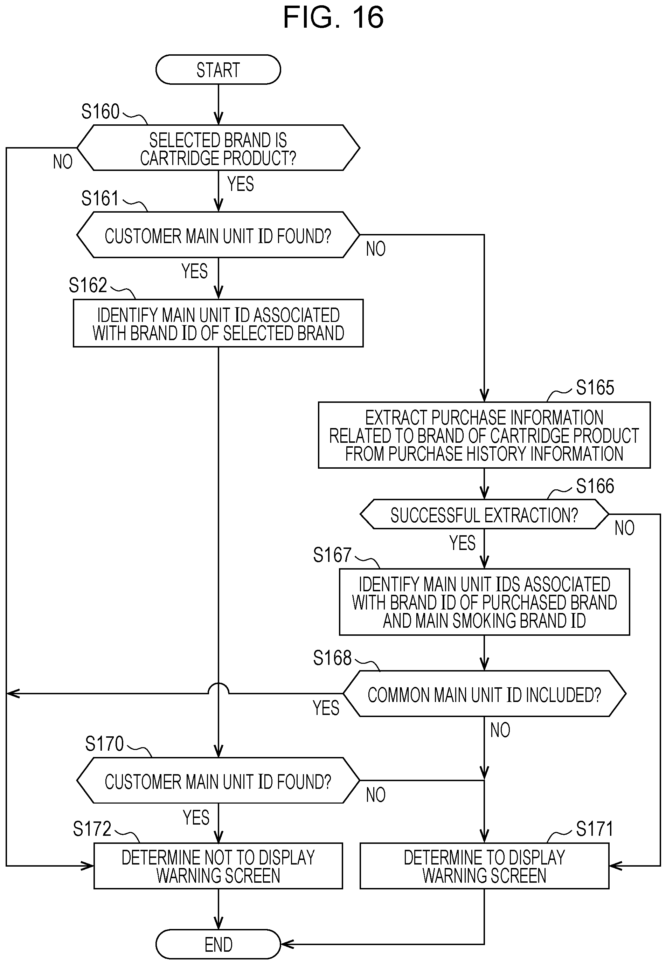

Next, an example operation of the present system 1 will be described. An example operation of the support PC 10 and the order terminal 20 when a tobacco product is ordered using the order terminal 20 will be described with reference to Fig. 15 and Fig. 16, in particular. Fig. 15 is a sequence chart illustrating an example operation related to ordering and removal of a tobacco product in the tobacco product management system according to the second embodiment.

As illustrated in Fig. 15, the second embodiment is different from the first embodiment in that a step (S 106(1)), a step (S106(2)), and a step (S106(3)) are added.

If the customer ID is received from the order terminal 20 (S 102), the support PC 10 (the customer management unit 102) searches the customer management DB 105 for the customer ID and determines whether a main smoking brand ID is associated with the customer ID (S103), and further determines whether a customer main unit ID is associated with the customer ID (S106(1)).

If a customer main unit ID has been extracted (S106(1); YES), the support PC 10 (the customer management unit 102) transmits the customer main unit ID to the order terminal 20 (S 106(2)). If no customer main unit ID has been extracted (S106(1); NO), the support PC 10 (the customer management unit 102) transmits main-unit-unspecified information to the order terminal 20 (S106(3)).

Fig. 16 is a flowchart illustrating a display determination method (the details of step (S110) in Fig. 15) of the warning screen related to the main unit of the aerosol inhaler in the second embodiment. In the second embodiment, the method illustrated in Fig. 16 is executed by the order terminal 20 (the display processing unit 202).

Upon detection of a selection operation performed on the brand selection screen, first, the order terminal 20 determines whether the selected brand targeted by the selection operation is a brand of a cartridge product (S 160). This determination can be performed using the inhaler flag included in the brand information of the selected brand.

If the selected brand is not a brand of a cartridge product (S160; NO), it is determined that the warning screen is not to be displayed (S172).

If the selected brand is a brand of a cartridge product (S160; YES), the order terminal 20 further determines whether the customer main unit ID of the customer who has performed the selection operation has been acquired (S161).

If the customer main unit ID has been acquired (S161; YES), the order terminal 20 identifies, based on the cartridge product identification information sent from the support PC 10, a main unit ID associated with the brand ID of the selected brand (S162).

The order terminal 20 determines whether the main unit ID identified for the selected brand includes a customer main unit ID (S 170). If a single main unit ID is identified for the selected brand, it is determined whether the main unit ID and the customer main unit ID match (S 170). In other words, as described above, the determination (S170) is a determination as to whether a cartridge product of the selected brand is usable with the model of the main unit indicated by the customer main unit ID.

If the customer main unit ID is included or both match (S170; YES), the order terminal 20 determines not to display the warning screen GW (S 172). If the customer main unit ID is not included or both do not match (S170; NO), the order terminal 20 determines to display the warning screen GW (S171).

The case where the customer main unit ID has not been acquired (S161; NO) is similar to the case (S141; NO) or (S142; NO) in the first embodiment illustrated in Fig. 14. That is, step (S165), step (S166), step (S167), and step (S168) are similar to step (S145), step (S146), step (S147), and step (S150).

As described above, as in the second embodiment, even the form in which a main unit ID of a main unit of an aerosol inhaler owned by a customer is managed in association with a customer ID can obtain an effect similar to that in the first embodiment.

### [Modifications]

Each of the embodiments described above is illustrative, and the content described above may be modified as necessary without departing from the gist thereof.

For example, in the embodiments described above, the first controller 30 that controls the pack fixture 50 and the second controller 40 that controls the carton fixture 60 are disposed separately. However, a single controller that controls both the pack fixture 50 and the carton fixture 60 may be used instead. In addition, the support PC 10 and a controller therefor may also be implemented as a single control device.

The pack fixture 50 and the carton fixture 60 are not limited to the configurations described above.

The pack fixture 50 may be configured to, instead of giving a notification of the positions of the magazines 500 by using the pack position notification LEDs 551 as in the embodiments described above, give a notification of the positions of the magazines 500 by using a projection image of a projector 56 or electronic shelf label tags on the front surface of the magazines 500.

Alternatively, the pack fixture 50 and the carton fixture 60 can be devices each having an automatic dispensing function.

In the embodiments described above, furthermore, fixture setting information, such as a correspondence relationship between a magazine ID in the pack fixture 50 and a brand ID of pack products accommodated in the corresponding magazine 500 and a correspondence relationship between the position of an accommodation area in the carton fixture 60 and a brand ID of carton products accommodated in the accommodation area, is managed by the support PC 10. Alternatively, the fixture setting information may be shared among the first controller 30, the second controller 40, and the support PC 10, or may be managed by the first controller 30 and the second controller 40.

In this manner, the customer management DB 105 and the store DB 106 stored in the support PC 10 may be stored in any device in the present system 1, and, furthermore, may be stored in a device outside the present system 1 as long as the device is capable of communicating with the support PC 10.

For example, the customer management DB 105 may be disposed in an external server device capable of communicating with the support PC 10.

Further, the mobile terminal of the customer may store a customer ID and a main smoking brand ID, and these may be managed by an application installed in the mobile terminal. In this case, the order terminal 20 is capable of acquiring the customer ID and the main smoking brand ID directly from the mobile terminal.

A customer main unit ID may be stored in the mobile terminal of the customer. In this case, the order terminal 20 is capable of also acquiring the customer ID and the customer main unit ID directly from the mobile terminal.

When the main unit of the aerosol inhaler has a communication function, the support PC 10 or the order terminal 20 is capable of acquiring information that can identify the model of the main unit via communication.

For example, the support PC 10 is capable of communicating with the main unit held by the customer via the communication unit 14 to acquire information that can identify the model of the main unit. The order terminal 20 is capable of communicating with the main unit held by the customer via the communication unit 25 to acquire information that can identify the model of the main unit.

Even when the main unit does not have a communication function, the order terminal 20 (the information acquisition unit 201) may acquire the main unit ID of the main unit held by the customer on the basis of a captured image obtained by the imaging unit 26 capturing an image of a portion or the entirety of the main unit. For example, the information acquisition unit 201 may apply a known image recognition technique to a captured image of a pattern or a two-dimensional code on the surface of the main unit or to an image of the main unit itself to acquire information that can identify the model of the main unit, and may identify the main unit ID from the information.

In this manner, when the main unit ID of the main unit held by the customer can be acquired via communication or using a captured image, the order terminal 20 (the information acquisition unit 201) can transmit the main unit ID to the support PC 10 together with the customer ID obtained from separately acquired customer information. In the second embodiment, when a customer ID and a main unit ID are acquired from the order terminal 20, the support PC 10 (the customer management unit 102) can register the main unit ID in the customer registration information as a customer main unit ID in association with the customer ID.

In the embodiments described above, when a main unit ID is acquired by the order terminal 20 (the information acquisition unit 201), a group of pieces of brand information of cartridge products of brands usable with the main unit indicated by the main unit ID may be displayed on the individual brand selection portion G2 while a brand group corresponding to the main unit ID is selected on the brand selection screen.

In another method, it is possible to identify the main unit ID of the main unit possessed by the customer on the basis of history information of delivery of gifts distributed to shareholders.

It is also possible to determine the necessity to display the warning screen GW by using a determination method completely different from that in the embodiments described above.

For example, in a case where the same customer continuously orders a plurality of brands of cartridge products, the display of the warning screen GW may be determined if the model of the main unit of the aerosol inhaler for the first ordered brand of cartridge product is different from that for the second or later ordered brand of cartridge product.

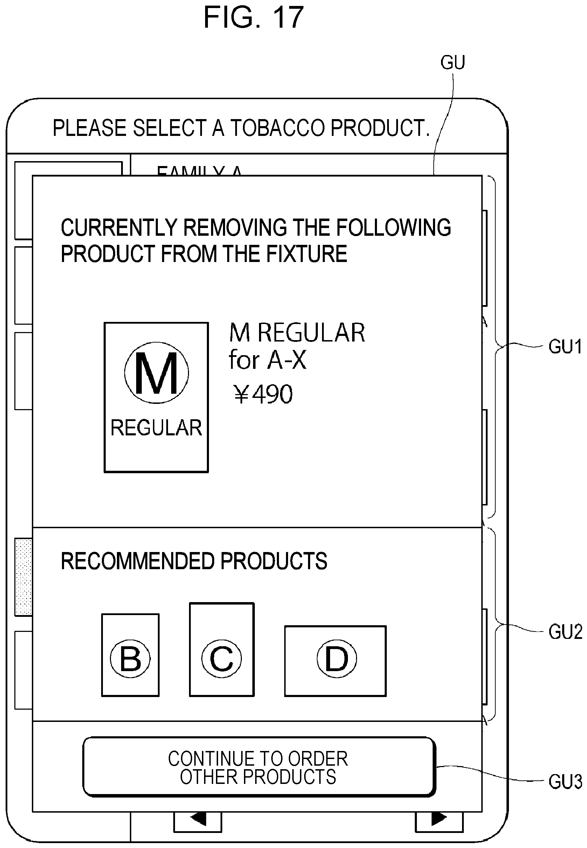

Fig. 17 is a diagram illustrating an example of a waiting screen GU displayed after an order operation of a tobacco product.

For example, upon detection of an operation of pressing the order confirmation operation portion G32 on the brand order screen G3, the display processing unit 202 can cancel the brand order screen G3 and display the waiting screen GU as illustrated in Fig. 17.

On the waiting screen GU exemplarily illustrated in Fig. 17, brand information of a brand for which an order is confirmed is displayed in a display area GU1, and brand information of three brands different from the brand is displayed in a display area GU2 as "recommended products". Further, an operation portion GU3 to "continue to order other products" is arranged in the lowermost portion of the waiting screen GU.

Upon detection of an operation of pressing an image of any of the brands displayed in the display area GU2, the display processing unit 202 may cancel the waiting screen GU and display the brand order screen G3 related to a tobacco product of the brand. Upon detection of an operation of pressing the operation portion GU3, the display processing unit 202 may cancel the waiting screen GU and display a brand selection screen.

Before canceling the waiting screen GU and displaying the brand order screen G3 or before displaying the brand order screen G3 in response to an operation of selecting any brand on the brand selection screen displayed after canceling the waiting screen GU, the display processing unit 202 can determine the necessity to display the warning screen GW as follows.

That is, the display processing unit 202 determines, based on the brand ID of an order-confirmed brand indicated by ordered brand information transmitted to the support PC 10 after the order is confirmed immediately before the waiting screen GU is displayed and the brand ID of the selected brand selected by the operation performed on the display area GU2 or the brand selection screen after the waiting screen GU is displayed, whether the model of a main unit dedicated to a cartridge product of the order-confirmed brand matches the model of a main unit dedicated to a cartridge product of the selected brand. This determination can be implemented by identifying, based on the cartridge product identification information, a main unit ID associated with the brand ID of the selected brand and a main unit ID associated with the brand ID of the order-confirmed brand, and determining whether the main unit ID identified for the selected brand and the main unit ID identified for the order-confirmed brand include a common main unit ID (including whether both main unit IDs match).

If a common main unit ID is not included, that is, if both the models of the main units do not match, it is desirable that the display processing unit 202 determines to display the warning screen and otherwise not to display the warning screen.

Such a determination method is applicable to any of the embodiments described above, and furthermore applicable to, as in the embodiments described above, a form in which no mechanism is provided to manage a main smoking brand ID, purchase history information, and a customer main unit ID for each customer.

Accordingly, the display processing unit 202 can be referred to as a display processing means for causing the user interface unit (the display device 15 of the order terminal 20) to display an order screen (the brand order screen G3) on which an order operation performed by a customer for a cartridge product of a first brand is receivable, and to display, on another screen (the waiting screen GU or the brand selection screen) transitioned from the order screen, second brand information related to a cartridge product of a second brand different from the cartridge product of the first brand (order-confirmed brand). Further, the display processing unit 202 can be referred to as a first acquisition means for acquiring, in response to an operation of selecting the cartridge product of the second brand indicated by the second brand information on the other screen (the waiting screen GU or the brand selection screen), selected brand information indicating the cartridge product of the second brand (selected brand), and a second acquisition means for acquiring specific brand information indicating the cartridge product of the first brand (order-confirmed brand) targeted by the order operation on the order screen (the brand order screen G3). In addition, the display processing unit 202 can also be referred to as an output processing means for causing the user interface unit (the display device 15) to output, when the cartridge product of the brand (selected brand) indicated by the acquired selected brand information is not usable with a main unit with which the cartridge product of the first brand (order-confirmed brand) indicated by the acquired specific brand information is usable, predetermined information (the warning screen GW) related to the main unit of the aerosol inhaler in accordance with the predetermined operation.

Still another method may be used as a method for determining the necessity to display the warning screen GW.

For example, in a case where a brand of a cartridge product different from a brand of a cartridge product selected through an operation of a customer is recommended by the present system 1, the display of the warning screen GW may be determined if the model of the main unit of the aerosol inhaler for a cartridge product of the recommended brand is different from that for the brand of the cartridge product selected through the operation of the customer.

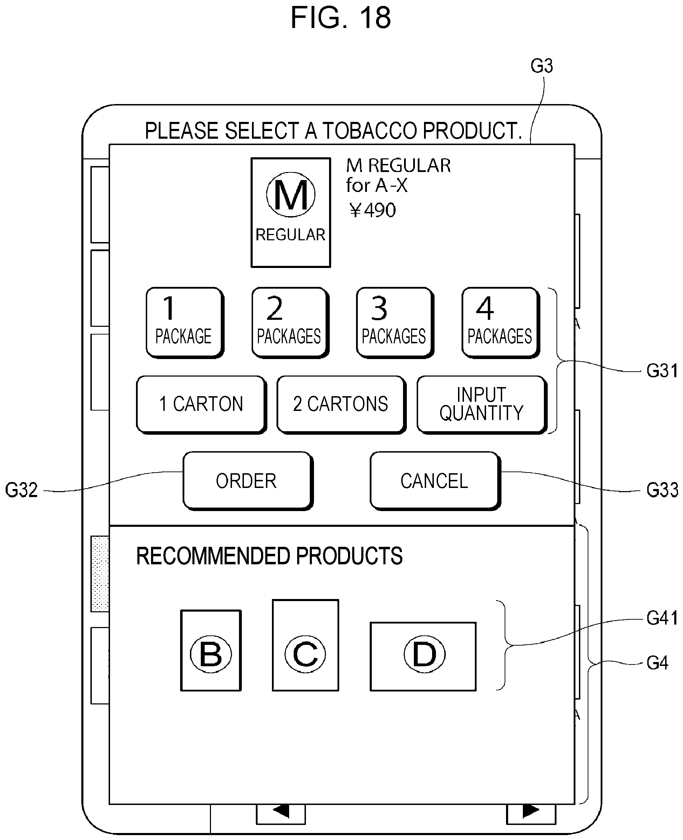

Fig. 18 is a diagram illustrating an example of the brand order screen G3 to which a recommended-product presentation area G4 is added.

In the example in Fig. 18, the brand order screen G3 includes the recommended-product presentation area G4 in a lower portion thereof, and the recommended-product presentation area G4 displays brand information of three brands different from the brand (order target brand) to be ordered on the brand order screen G3 as "recommended products".

For example, the display processing unit 202 can acquire recommended-product information from the support PC 10 and display brand information of a brand indicated by the recommended-product information in the recommended-product presentation area G4. Any known method can be used as a method for selecting a recommended product.

In this case, upon detection of an operation of pressing an image of any of the brands displayed in the recommended-product presentation area G4 of the brand order screen G3, the display processing unit 202 can cancel the brand order screen G3 and then determine the necessity to display the warning screen GW as follows.

That is, the display processing unit 202 determines, based on the brand ID of the order target brand displayed on the brand order screen G3 and the brand ID of the brand (selected brand) selected in the recommended-product presentation area G4, whether the model of a main unit dedicated to a cartridge product of the order target brand matches the model of a main unit dedicated to a cartridge product of the selected brand. This determination can be implemented by identifying, based on the cartridge product identification information, a main unit ID associated with the brand ID of the selected brand and a main unit ID associated with the brand ID of the order target brand, and determining whether the main unit ID identified for the selected brand and the main unit ID identified for the order target brand include a common main unit ID (including whether both main unit IDs match).

If a common main unit ID is not included, that is, if both the models of the main units do not match, it is desirable that the display processing unit 202 determines to display the warning screen and otherwise not to display the warning screen.

Such a determination method is also applicable to any of the embodiments described above, and furthermore applicable to, as in the embodiments described above, a form in which no mechanism is provided to manage a main smoking brand ID, purchase history information, and a customer main unit ID for each customer.

Accordingly, the display processing unit 202 can be referred to as a display processing means for causing the user interface unit (the display device 15 of the order terminal 20) to display an order screen (the brand order screen G3) on which an order operation performed by a customer for a cartridge product of a first brand (order target brand) is receivable, and to display, on the order screen (the brand order screen G3), second brand information related to a cartridge product of a second brand (recommended brand) different from the cartridge product of the first brand (order target brand). Further, the display processing unit 202 can be referred to as a first acquisition means for acquiring, in response to an operation of selecting the cartridge product of the second brand (recommended brand) indicated by the second brand information on the order screen (the brand order screen G3), selected brand information indicating the cartridge product of the second brand (selected brand), and a second acquisition means for acquiring specific brand information indicating the cartridge product of the first brand (order target brand) targeted by the order operation on the order screen (the brand order screen G3). In addition, the display processing unit 202 can also be referred to as an output processing means for causing the user interface unit (the display device 15) to output, when the cartridge product of the brand (selected brand) indicated by the acquired selected brand information is not usable with a main unit with which the cartridge product of the first brand (order target brand) indicated by the acquired specific brand information is usable, predetermined information (the warning screen GW) related to the main unit of the aerosol inhaler in accordance with the predetermined operation.

When a cartridge product of a brand recommended by the present system 1 is selected, the warning screen GW can be displayed without the determination using a brand ID as described above. This is because the brand of the cartridge product recommend by the present system 1 is certainly different from the brand of a cartridge product selected through an operation of a customer, and the models of the main units dedicated to them can thus be different. In this case, the warning screen GW is likely to be displayed more frequently, which can make the customer feel inconvenient. However, it is possible to prevent ordering of a wrong cartridge product.

In the embodiments and modifications described above, the order terminal 20 determines the necessity to display the warning screen. Alternatively, the necessity to display the warning screen may be determined by the support PC 10. In this case, it is desirable that the order terminal 20 acquires only a determination result from the support PC 10 and switches display or non-display of the warning screen.

Furthermore, in the embodiments and modifications described above, the order terminal 20 can be replaced with a mobile terminal or a PC, and the support PC 10 can be replaced with a server device communicably connected to the mobile terminal or the PC via a public line (such as the Internet). In this case, the present system 1 may be a system that provides network shopping services to simply receive orders for tobacco products. Thus, the present system 1 does not need to be installed in a store, and the first controller 30, the second controller 40, the pack fixture 50, the carton fixture 60, and the fixture management terminal 70 do not need to be provided.

Further, it is desirable that the warning screen GW is displayed not in response to an order operation for a cartridge product but in response to an operation of selecting a cartridge product for some purpose. For example, to register a desired brand of a cartridge product as a main smoking brand, the necessity to display the warning screen GW may be determined in accordance with an operation of selecting the desired brand, or may be determined in accordance with an operation of selecting a certain brand of a cartridge product for other purposes.

In addition, as in the second embodiment described above, in a form in which a main unit ID of a main unit of an aerosol inhaler is managed in association with a customer ID, at the start of sales of a new main unit that is an upgraded or alternative version of the main unit, a screen for recommending a transition to the new main unit can be displayed. For example, when a main unit ID corresponding to a customer is identified in the order terminal 20, the support PC, or the mobile terminal of the customer, information related to a new main unit associated with the main unit ID is acquired from another device or a memory thereof, and, based on the information, a screen for recommending a transition to the new main unit is displayed on the order terminal 20 or the mobile terminal of the customer. Any of the methods described above can be used as a method for identifying a main unit ID.

This can also be implemented in a form in which information related to a new main unit is acquired on the basis of a brand ID. For example, when the brand ID of an ordered brand is identified, when a main smoking brand ID is identified, when any brand ID to be registered is identified, or in other cases, it is desirable that information related to a new main unit is acquired from another device or a memory thereof using the brand ID.

In the sequence charts described above, a plurality of steps (processing operations) are illustrated in order. However, the order in which the steps to be executed in this embodiment are executed is not limited to the illustrated order. In this embodiment, the order of the illustrated steps may be changed without causing any problem in terms of content.

In addition, part or all of the content described above may also be identified as follows. However, the content described above is not limited to the following description.
(1) A product selection support system for supporting selection of a cartridge product to be used by being attached to a main unit of an aerosol inhaler, the product selection support system including:
   a first acquisition means for acquiring selected brand information indicating a brand of a cartridge product selected by a customer's predetermined operation on a user interface unit;
   a second acquisition means for acquiring specific brand information indicating a cartridge product of a specific brand among cartridge products of a plurality of brands; and
   an output processing means for causing the user interface unit to output predetermined information related to the main unit of the aerosol inhaler, in accordance with the predetermined operation, when the cartridge product of the brand indicated by the acquired selected brand information is not usable with a main unit with which the cartridge product of the specific brand indicated by the acquired specific brand information is usable.
(2) The product selection support system according to (1), further including:
   a display processing means for causing the user interface unit to display an order screen on which an order operation performed by the customer for a cartridge product of a first brand is receivable, and to display, on the order screen or on another screen transitioned from the order screen, second brand information related to a cartridge product of a second brand different from the cartridge product of the first brand, wherein
   the customer's predetermined operation includes an operation of selecting the cartridge product of the second brand indicated by the second brand information on the order screen or the other screen,
   the first acquisition means acquires the selected brand information indicating the cartridge product of the second brand selected by the customer's predetermined operation, and
   the second acquisition means acquires the specific brand information indicating the cartridge product of the first brand targeted by the order operation on the order screen.
(3) The product selection support system according to (1) or (2), wherein
   the second acquisition means acquires the specific brand information indicating a cartridge product of a brand registered for the customer that is stored in a customer information storage unit.
(4) The product selection support system according to (1) or (2), further including:
   an identifier acquisition means for acquiring a customer identifier capable of identifying the customer or a portable object carried by the customer, wherein
   the second acquisition means acquires the specific brand information indicating a cartridge product of a brand extracted from purchase history information of the customer that is stored in a purchase history storage unit in association with the acquired customer identifier.
(5) A product selection support system for supporting selection of a cartridge product to be used by being attached to a main unit of an aerosol inhaler, the product selection support system including:
   a first acquisition means for acquiring selected brand information indicating a brand of a cartridge product selected by a customer's predetermined operation on a user interface unit;
   a second acquisition means for acquiring main unit information related to a specific main unit among a plurality of types of main units; and
   an output processing means for causing the user interface unit to output predetermined information related to the main unit of the aerosol inhaler, in accordance with the predetermined operation, when the cartridge product of the brand indicated by the acquired selected brand information is not usable with the specific main unit indicated by the acquired main unit information.
(6) The product selection support system according to (5), further including:
   a communication means capable of communicating with the specific main unit held by the customer, wherein
   the second acquisition means acquires the main unit information related to the specific main unit via communication performed by the communication means with the specific main unit.
(7) The product selection support system according to (5), further including:
   an image acquisition means for acquiring a captured image of a portion or entirety of the specific main unit held by the customer, wherein
   the second acquisition means acquires the main unit information related to the specific main unit, based on the acquired captured image.
(8) The product selection support system according to any one of (5) to (7), further including:
   a storage processing means for storing, in a customer information storage unit, a main unit identifier capable of identifying the specific main unit, wherein
   the second acquisition means acquires the main unit identifier stored in the customer information storage unit, as the main unit information, and
   the storage processing means stores, in the customer information storage unit, an identifier of a main unit with which the cartridge product of the brand indicated by the acquired selected brand information is usable as the main unit identifier, in response to a predetermined operation performed by the customer after the predetermined information is output to the user interface unit.
(9) The product selection support system according to any one of (1) to (8), wherein
   the output processing means performs predetermined determination using at least the acquired main unit information or the acquired specific brand information and the acquired selected brand information to determine whether to cause the user interface unit to output the predetermined information related to the main unit of the aerosol inhaler.
(10) The product selection support system according to any one of (1) to (9), wherein
   the output processing means outputs, to the user interface unit, the predetermined information related to a main unit with which the cartridge product of the brand selected by the predetermined operation is usable.
(11) A product selection support method for supporting selection of a cartridge product to be used by being attached to a main unit of an aerosol inhaler, the product selection support method including,
   by one or more computers:
   acquiring selected brand information indicating a brand of a cartridge product selected by a customer's predetermined operation on a user interface unit;
   acquiring specific brand information indicating a cartridge product of a specific brand among cartridge products of a plurality of brands; and
   causing the user interface unit to output predetermined information related to the main unit of the aerosol inhaler, in accordance with the predetermined operation, when the cartridge product of the brand indicated by the acquired selected brand information is not usable with a main unit with which the cartridge product of the specific brand indicated by the acquired specific brand information is usable.
(12) The product selection support method according to (11), wherein
   the one or more computers
   cause the user interface unit to display an order screen on which an order operation performed by the customer for a cartridge product of a first brand is receivable, and
   to display, on the order screen or on another screen transitioned from the order screen, second brand information related to a cartridge product of a second brand different from the cartridge product of the first brand,
   the customer's predetermined operation includes an operation of selecting the cartridge product of the second brand indicated by the second brand information on the order screen or the other screen,
   the acquired selected brand information indicates the cartridge product of the second brand selected by the customer's predetermined operation, and
   the acquired specific brand information indicates the cartridge product of the first brand targeted by the order operation on the order screen.
(13) The product selection support method according to (11) or (12), wherein
   the acquired specific brand information indicates a cartridge product of a brand registered for the customer that is stored in a customer information storage unit.
(14) The product selection support method according to (11) or (12), further including,
   by the one or more computers:
      acquiring a customer identifier capable of identifying the customer or a portable object carried by the customer, wherein
   the acquired specific brand information indicates a cartridge product of a brand extracted from purchase history information of the customer that is stored in a purchase history storage unit in association with the acquired customer identifier.
(15) A product selection support method for supporting selection of a cartridge product to be used by being attached to a main unit of an aerosol inhaler, the product selection support method including,
   by one or more computers:
   acquiring selected brand information indicating a brand of a cartridge product selected by a customer's predetermined operation on a user interface unit;
   acquiring main unit information related to a specific main unit among a plurality of types of main units; and
   causing the user interface unit to output predetermined information related to the main unit of the aerosol inhaler, in accordance with the predetermined operation, when the cartridge product of the brand indicated by the acquired selected brand information is not usable with the specific main unit indicated by the acquired main unit information.
(16) The product selection support method according to (15), further including,
   by the one or more computers:
      communicating with the specific main unit held by the customer, wherein
   the acquired main unit information is acquired via communication with the specific main unit.
(17) The product selection support method according to (15), further including,
   by the one or more computers:
      acquiring a captured image of a portion or entirety of the specific main unit held by the customer, wherein
   the acquired main unit information is acquired based on the acquired captured image.
(18) The product selection support method according to any one of (15) to (17), wherein
   the acquired main unit information includes a main unit identifier capable of identifying the specific main unit that is stored in a customer information storage unit, and
   the product selection support method further includes,
   by the one or more computers:
      storing, in the customer information storage unit, an identifier of a main unit with which the cartridge product of the brand indicated by the acquired selected brand information is usable as the main unit identifier, in response to a predetermined operation performed by the customer after the predetermined information is output to the user interface unit.
(19) The product selection support method according to any one of (11) to (18), further including,
   by the one or more computers:
   performing predetermined determination using at least the acquired main unit information or the acquired specific brand information and the acquired selected brand information to determine whether to cause the user interface unit to output the predetermined information related to the main unit of the aerosol inhaler.
(20) The product selection support method according to any one of (11) to (19), wherein
   the predetermined information to be output to the user interface unit includes information related to a main unit with which the cartridge product of the brand selected by the predetermined operation is usable.
(21) A computer program for causing the one or more computers to execute the product selection support method according to any one of (11) to (20).

The present application claims priority on Japanese Patent Application (Japanese Patent Application No. 2020-14196) filed January 30, 2020, the entire contents of which are incorporated herein by reference.

## Claims

1. A product selection support system for supporting selection of a cartridge product to be used by being attached to a main unit of an aerosol inhaler, the product selection support system comprising:
a first acquisition means for acquiring selected brand information indicating a brand of a cartridge product selected by a customer's predetermined operation on a user interface unit;
a second acquisition means for acquiring specific brand information indicating a cartridge product of a specific brand among cartridge products of a plurality of brands; and
an output processing means for causing the user interface unit to output predetermined information related to the main unit of the aerosol inhaler, in accordance with the predetermined operation, when the cartridge product of the brand indicated by the acquired selected brand information is not usable with a main unit with which the cartridge product of the specific brand indicated by the acquired specific brand information is usable.

2. The product selection support system according to claim 1, further comprising:
a display processing means for causing the user interface unit to display an order screen on which an order operation performed by the customer for a cartridge product of a first brand is receivable, and to display, on the order screen or on another screen transitioned from the order screen, second brand information related to a cartridge product of a second brand different from the cartridge product of the first brand, wherein
the customer's predetermined operation includes an operation of selecting the cartridge product of the second brand indicated by the second brand information on the order screen or the other screen,
the first acquisition means acquires the selected brand information indicating the cartridge product of the second brand selected by the customer's predetermined operation, and
the second acquisition means acquires the specific brand information indicating the cartridge product of the first brand targeted by the order operation on the order screen.

3. The product selection support system according to claim 1 or 2, wherein
the second acquisition means acquires the specific brand information indicating a cartridge product of a brand registered for the customer that is stored in a customer information storage unit.

4. The product selection support system according to claim 1 or 2, further comprising:
an identifier acquisition means for acquiring a customer identifier capable of identifying the customer or a portable object carried by the customer, wherein
the second acquisition means acquires the specific brand information indicating a cartridge product of a brand extracted from purchase history information of the customer that is stored in a purchase history storage unit in association with the acquired customer identifier.

5. A product selection support system for supporting selection of a cartridge product to be used by being attached to a main unit of an aerosol inhaler, the product selection support system comprising:
a first acquisition means for acquiring selected brand information indicating a brand of a cartridge product selected by a customer's predetermined operation on a user interface unit;
a second acquisition means for acquiring main unit information related to a specific main unit among a plurality of types of main units; and
an output processing means for causing the user interface unit to output predetermined information related to the main unit of the aerosol inhaler, in accordance with the predetermined operation, when the cartridge product of the brand indicated by the acquired selected brand information is not usable with the specific main unit indicated by the acquired main unit information.

6. The product selection support system according to claim 5, further comprising:
a communication means capable of communicating with the specific main unit held by the customer, wherein
the second acquisition means acquires the main unit information related to the specific main unit via communication performed by the communication means with the specific main unit.

7. The product selection support system according to claim 5, further comprising:
an image acquisition means for acquiring a captured image of a portion or entirety of the specific main unit held by the customer, wherein
the second acquisition means acquires the main unit information related to the specific main unit, based on the acquired captured image.

8. The product selection support system according to any one of claims 5 to 7, further comprising:
a storage processing means for storing, in a customer information storage unit, a main unit identifier capable of identifying the specific main unit, wherein
the second acquisition means acquires the main unit identifier stored in the customer information storage unit, as the main unit information, and
the storage processing means stores, in the customer information storage unit, an identifier of a main unit with which the cartridge product of the brand indicated by the acquired selected brand information is usable as the main unit identifier, in response to a predetermined operation performed by the customer after the predetermined information is output to the user interface unit.

9. The product selection support system according to any one of claims 1 to 8, wherein
the output processing means performs predetermined determination using at least the acquired main unit information or the acquired specific brand information and the acquired selected brand information to determine whether to cause the user interface unit to output the predetermined information related to the main unit of the aerosol inhaler.

10. The product selection support system according to any one of claims 1 to 9, wherein
the output processing means outputs, to the user interface unit, the predetermined information related to a main unit with which the cartridge product of the brand selected by the predetermined operation is usable.

11. A product selection support method for supporting selection of a cartridge product to be used by being attached to a main unit of an aerosol inhaler, the product selection support method comprising,
by one or more computers:
acquiring selected brand information indicating a brand of a cartridge product selected by a customer's predetermined operation on a user interface unit;
acquiring specific brand information indicating a cartridge product of a specific brand among cartridge products of a plurality of brands; and
causing the user interface unit to output predetermined information related to the main unit of the aerosol inhaler, in accordance with the predetermined operation, when the cartridge product of the brand indicated by the acquired selected brand information is not usable with a main unit with which the cartridge product of the specific brand indicated by the acquired specific brand information is usable.

12. A product selection support method for supporting selection of a cartridge product to be used by being attached to a main unit of an aerosol inhaler, the product selection support method comprising,
by one or more computers:
acquiring selected brand information indicating a brand of a cartridge product selected by a customer's predetermined operation on a user interface unit;
acquiring main unit information related to a specific main unit among a plurality of types of main units; and
causing the user interface unit to output predetermined information related to the main unit of the aerosol inhaler, in accordance with the predetermined operation, when the cartridge product of the brand indicated by the acquired selected brand information is not usable with the specific main unit indicated by the acquired main unit information.
